(19) Europäisches Patentamt
European Patent Office
Office européen des brevets

(11) **EP 3 613 600 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **19020531.0**

(22) Anmeldetag: **11.10.2011**

(51) Internationale Patentklassifikation (IPC):
**B42D 25/29** *(2014.01)*   **B42D 25/355** *(2014.01)*
**B42D 25/425** *(2014.01)*   **B44F 1/02** *(2006.01)*
**G02B 30/23** *(2020.01)*   **B42D 25/351** *(2014.01)*
**G02B 3/00** *(2006.01)*

(52) Gemeinsame Patentklassifikation (CPC):
**B44F 1/02; B42D 25/29; B42D 25/351;
B42D 25/355; B42D 25/425; G02B 3/0043;
G02B 3/0056; G02B 30/23;** B42D 25/324;
B42D 25/328; B42D 2033/10; B42D 2033/18;
B42D 2033/26; B42D 2035/20

(54) **DARSTELLUNGSELEMENT MIT AUF EINEM SUBSTRAT ANGEORDNETEN OPTISCHEN ELEMENTEN ZUR ERZEUGUNG EINES OBERHALB ODER UNTERHALB DES SUBSTRATS SCHWEBENDEN, AUS LICHTFLECKEN ZUSAMMENGESETZEN BILDES**

REPRESENTATION ELEMENT COMPRISING OPTICAL ELEMENTS ARRANGED ON A SUBSTRATE, FOR PRODUCING AN IMAGE COMPOSED OF LIGHT SPOTS AND SUSPENDED ABOVE OR BELOW THE SUBSTRATE

ÉLÉMENT DE REPRÉSENTATION COMPORTANT DES ÉLÉMENTS OPTIQUES AGENCÉS SUR UN SUBSTRAT POUR GÉNÉRER UNE IMAGE FLOTTANT AU-DESSUS OU AU-DESSOUS DU SUBSTRAT CONSTITUÉE DE POINT LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2010 DE 102010048262**

(43) Veröffentlichungstag der Anmeldung:
**26.02.2020 Patentblatt 2020/09**

(62) Dokumentnummer(n) der früheren Anmeldung(en) nach Art. 76 EPÜ:
**11773678.5 / 2 627 520**

(73) Patentinhaber: **Giesecke+Devrient Currency Technology GmbH
81677 München (DE)**

(72) Erfinder:
• **Kaule, Wittich
82275 Emmering (DE)**
• **Fuhse, Christian
83624 Otterfing (DE)**

(74) Vertreter: **Giesecke+Devrient IP
Prinzregentenstraße 161
81677 München (DE)**

(56) Entgegenhaltungen:
FR-A1- 2 943 800   US-A- 5 105 306
US-A1- 2002 114 078   US-A1- 2010 231 860
US-B1- 6 288 842   US-B2- 7 261 417

• "Micro-Optics. Elements, systems and applications", 1 January 1997, TAYLOR & FRANCIS, ISBN: 978-0-7484-0481-0, article M.C. HUTLEY: "Refractive Lenslet Arrays: 5.4 Thermal Reflow", pages: 132 - 136, XP055462573

**EP 3 613 600 B1**

# EP 3 613 600 B1

**Beschreibung**

Die Erfindung betrifft ein Darstellungselement mit einem Substrat mit einem Flächenbereich, in dem eine Mehrzahl optischer Elemente angeordnet ist. Die Erfindung betrifft ferner ein Verfahren zur Herstellung eines derartigen Darstellungselements und einen Datenträger mit einem solchen Darstellungselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen.

Besondere Beachtung erfahren dabei gegenwärtig Sicherheitselemente mit dreidimensional wirkenden Bildern, da diese einerseits auch für den Laien leicht erkenn- und prüfbar sind und sie andererseits mit gängigen Kopierverfahren nicht originalgetreu reproduziert werden können.

Dabei sind mehrere Techniken bekannt, mit denen bei beidäugiger Betrachtung flacher Bilder ein dreidimensionaler Bildeindruck erzeugt werden kann. Bei Anaglyphenbildern sind etwa zwei stereoskopische Halbbilder einander überlagert. Bei Betrachtung mit einem Hilfsmittel, wie einer Rot-Grün-Brille oder einer Polarisationsbrille werden die beiden Halbbilder für die beiden Augen getrennt.

Eine andere Technik verwendet Linsen- oder Spiegelrasterbilder, die aus einem Mehrschichtaufbau mit Motivschicht und von der Motivschicht beabstandeter Linsen- bzw. Spiegelschicht bestehen. Ein Beispiel dieser Technik sind die 3D-Moiré-Magnifier, wie sie in der Druckschrift WO 2009/0000530 A2 beschrieben sind.

Ein weiterer Ansatz, wie er etwa in der Druckschrift WO 90/08338 A1 beschrieben ist, besteht darin, das Motiv als flaches Relief ausbilden, wobei sich die Oberfläche des Motivs nachgeahmt und/oder gestückelt in der Oberfläche des Bildes wiederfindet.

Aus der Druckschrift US 2002/0114078 A1 ist eine Linsenanordnung bekannt, die eine Anordnung von Linsenelementen umfasst, um ein auf einer Rückwand angeordnetes Bild vergrößert zu reproduzieren.

Die Druckschrift US 2010/0231860 A1 beschreibt ein optisches Bildelement mit einem optischen Element, das die spiegelnden Oberflächen einer Vielzahl von Mikrospiegeln zur Erzeugung eines Bilds eines Objekts auf der gegenüberliegenden Seite des Elements als schwebendes reelles Bild verwendet.

Aus der Druckschrift US 6,288,842 B1 ist ebenfalls eine Linsenanordnung bekannt. Zur Herstellung eines zusammengesetzten Bildes, das über oder unter der Trägerfolie schwebt, weist die an die Mikrolinsen angrenzende Materialschicht durch Materialveränderung erzeugte Bilder auf, die bei Beleuchtung mit z.B. diffusem Licht in Reflexion wahrgenommen werden können.

Die Druckschrift US 7,261,417 B2 befasst sich mit einen 3D-Anzeigesystem, bei dem ein Motiv durch eine Motivschicht vorgegeben wird, die in einer speziellen Ausgestaltung durch mit einer Mikrolinsenanordnung gekoppelte Projektoren gebildet ist. Diese zeigen jeweils zweidimensionale Elementarbilder an, die zusammen mit der Mikrolinsenanordnung ein dreidimensional erscheinendes integrales Bild erzeugen.

Die Herstellung refraktiver Linsenanordnungen mithilfe der "Thermal Reflow" -Technik ist in dem Kapitel "Refractive Lenslet Arrays: 5.4 Thermal Reflow", M.C. Hutley, "Micro-Optics. Elements, Systems and applications", 1997, Taylor & Francis, Seiten 132-136, beschrieben.

Die Druckschrift FR 2 943 800 A1 befasst sich mit einem Sicherheitselement mit einer reflektierenden optischen Struktur, die mindestens eine elementare reflektierende optische Struktur mit einer nicht ebenen reflektierenden Oberfläche umfasst, die ein Bild eines Musters in mindestens einer Beobachtungsrichtung des Sicherheitselements bereitstellt, oder die mindestens zwei elementare reflektive optische Strukturen unterschiedlichen Typs umfasst, von denen insbesondere mindestens eine angeordnet ist, um ein Lichtpunktbild einer Lichtquelle zum Beobachten des Sicherheitselements zu erzeugen.

Schließlich werden für Sicherheitselemente seit längerem Hologramme, holographische Stereogramme und hologranunartige Gitterbilder eingesetzt, um einen dreidimensionalen Bildeindruck zu erzeugen. Bei dieser Technik spielt Lichtbeugung und Interferenz an den holographischen Strukturen und Beugungsgittern eine entscheidende Rolle.

Davon ausgehend davon liegt der Erfindung die Aufgabe zugrunde, ein Darstellungselement der eingangs genannten Art zu schaffen, das ein attraktives visuelles Erscheinungsbild aufweist. Für Sicherheitsanwendungen soll das Darstellungselement zudem eine hohe Fälschungssicherheit aufweisen und darüber hinaus auch für Laien einfach auf Echtheit zu prüfen sein.

Diese Aufgabe wird durch das Darstellungselement mit den Merkmalen des Hauptanspruchs gelöst. Ein Verfahren zur Herstellung eines derartigen Darstellungselements und ein mit einem solchen Darstellungselement ausgestatteter Datenträger sind in den nebengeordneten Ansprüchen angegeben. Weiterbildungen der Erfindung sind Gegenstand der Unteransprüche.

Gemäß der Erfindung enthält ein gattungemäßes Darstellungselement ein Substrat mit einem Flächenbereich, in dem eine Mehrzahl optischer Elemente angeordnet ist. Das Darstellungselement ist dabei ausgelegt und bestimmt, bei Beleuchtung ein Lichtfleckenbild aus einer Mehrzahl von Lichtflecken zu erzeugen, die für einen Betrachter oberhalb oder unterhalb des Flächenbereichs schwebend erscheinen und die in Form eines vorbestimmten Motivs angeordnet sind.

Dazu sind die genannten optischen Elemente durch refraktive und/oder reflektive optische Elemente gebildet, wobei jedem Lichtfleck des Lichtfleckenbilds eine Mehrzahl von refraktiven und/oder reflektiven optischen Elementen zugeordnet ist, welche bei Beleuchtung des Darstellungselements zur Erzeugung des ihm zugeordneten Lichtflecks beitragen.

Die Erfindung beruht somit auf dem Gedanken, ein dreidimensionales Motiv vorzugeben, das aus über oder unter dem Darstellungselement schwebenden Lichtflecken besteht. Um die Lichtflecke bei Beleuchtung zu erzeugen, weist das Darstellungselement nebeneinander liegende oder verschachtelte Teile von Spiegeln, Linsen oder Prismen auf, die so ausgelegt sind, dass sie in einem Bildraum bei geeigneter Beleuchtung schwebende Lichtreflexe erzeugen, die zusammengenommen das vorgegebene dreidimensionale Motiv darstellen. Die schwebenden Lichtreflexe sind im physikalischen Sinne reelle Bilder oder virtuelle Bilder der beleuchtenden Lichtquellen, wie nachfolgend genauer erläutert. Der visuelle Eindruck ist dabei besonders gut, wenn das Darstellungselement mit parallelem Licht, beispielsweise einer weit entfernten Lichtquelle, beleuchtet wird.

Das durch die Beleuchtung entstehende dreidimensionale Lichtfleckenbild bietet dem Betrachter einen ungewöhnlichen und visuell ansprechenden dreidimensionalen Bildeindruck, der dem Darstellungselement einen hohen Aufmerksamkeits- und Wiedererkennungswert verleiht. Das Vorliegen oder Nichtvorliegen des Effekts ist für jeden Benutzer leicht festzustellen, das Darstellungselement also einfach verifizierbar. Dennoch ist die Spiegel- bzw. Linsenanordnung aufgrund des erforderlichen Know-how und der benötigen Technologie für einen potentiellen Fälscher nur schwer nachzustellen.

Nachfolgend werden die refraktiven und/oder reflektiven optischen Elemente der kürzeren Benennung halber meist nur als "optische Elemente" bezeichnet. Es versteht sich jedoch, dass damit im Rahmen der Erfindung stets refraktive und/oder reflektive optische Elemente gemeint sind. Die optischen Elemente können entweder rein refraktiv sein, wie etwa eine Linse oder ein Mikroprisma, rein reflektiv, wie etwa ein Spiegel oder ein Mikrospiegel, oder sowohl refraktiv als auch reflektiv, wie etwa eine mit einer semitransparenten Beschichtung versehene Linse oder ein mit einer semitransparenten Beschichtung versehenes Mikroprisma. In jedem Fall spielen Beugungs- und Interferenzeffekte bei den erfindungsgemäßen refraktiven und/oder reflektiven optischen Elementen keine Rolle und können stets vernachlässigt werden.

Erfindungsgemäß sind die optischen Elemente und die Schwebehöhen der Lichtflecke so ausgelegt, dass für die Lichtflecke und die zugeordneten optischen Elemente jeweils die Bedingung $f/d < 5$ gilt, wobei $f$ die Schwebehöhe eines Lichtflecks oberhalb oder unterhalb des Flächenbereichs bezeichnet und $d$ den Durchmesser der zu diesem Lichtfleck beitragenden optischen Elemente angibt. Dadurch ist sichergestellt, dass die Lichtflecke bei normalem Betrachtungsabstand von etwa, 30 cm für beide Augen des Betrachters innerhalb der Öffnung des zugehörigen optischen Elements liegen.

Gemäß einer nicht unter den Anspruchsgegenstand fallenden Variante schweben die Lichtflecken des Lichtfleckenbilds in mehreren verschiedenen Schwebehöhen oberhalb oder unterhalb des Flächenbereichs, um ein dreidimensionales Motiv zu bilden. Erfindungsgemäß schweben die Lichtflecken des Lichtfleckenbilds bereichsweise alle in derselben Schwebehöhe oberhalb oder unterhalb des Flächenbereichs, um ein Kulissenmotiv zu bilden. Mit Vorteil kann in dem Lichtfleckenbild auch ein dreidimensionales Motiv mit einem zweidimensionalen Motiv kombiniert sein, da dann auch bei schlechten Lichtverhältnissen noch ein Lichtfleckenbild erkennbar und damit eine Echtheitsprüfung möglich ist.

Die optischen Elemente umfassen zweckmäßig gewölbte Spiegel, insbesondere Hohlspiegel (konkav gewölbte Spiegel) oder Wölbspiegel (konvex gewölbte Spiegel). Die gewölbten Spiegel können sphärisch, elliptisch, rotationssymmetrisch asphärisch, nichtrotationssymmetrisch asphärisch oder rinnenförmig ausgebildet sein, wobei im letzteren Fall die Rinnen geradlinig oder krummlinig verlaufen können. Elliptische Spiegel weisen in x- und y-Richtung eine unterschiedliche Spiegelkrümmung auf, bei asphärischen Spiegeln weicht die Spiegelfläche von einer Kugelform ab. Asphärische Spiegel können rotationssymmetrisch oder im allgemeinsten Fall auch nichtrotationssymmetrisch sein. Gradlinige rinnenförmige Spiegel können als Sonderfall elliptischer Spiegel angesehen werden, bei denen der Krümmungsradius in einer Raumrichtung unendlich groß ist. Um eine geringe Strukturhöhe zu verwirklichen, können die gewölbten Spiegel auch zumindest teilweise durch Fresnelspiegel gebildet sein.

Alternativ oder zusätzlich können die optischen Elemente auch Linsen umfassen, insbesondere sphärische, elliptische, rotationssymmetrisch aspllärische, nichtrotationssymmetrisch asphärische oder zylindrische Linsen. Elliptische Linsen weisen in x- und y-Richtung eine unterschiedliche Krümmung auf, bei asphärischen Linsen weicht die lichtbrechende Linsenfläche von einer Kugelform ab. Asphärische Linsen können rotationssymmetrisch oder im allgemeinsten Fall auch nichtrotationssymmetrisch sein. Zylindrische Linsen können als Sonderfall elliptischer Linsen angesehen werden, bei denen der Krümmungsradius in einer Raumrichtung unendlich groß ist. Auch die Linsen können zumindest teilweise durch Fresnellinsen gebildet sein, um zu einer geringeren Strukturhöhe zu gelangen.

In einer nicht unter den Anspruchsgegenstand fallenden Variante ist jedem Lichtfleck des Lichtfleckenbilds genau ein optisches Element zugeordnet.

Erfindungsgemäß ist jedem Lichtfleck des Lichtfleckenbilds eine Mehrzahl von optischen Elementen zuordnet. Zuordnung bedeutet dabei, dass das optische Element bei Beleuchtung durch Spiegelung (Reflexion) und/oder Lichtbrechung (Refraktion) zur Erzeugung dieses Lichtflecks beiträgt. Die optischen Elemente sind bevorzugt beabstandet auf dem Flächenbereich verteilt. Durch die entstehenden Zwischenräume zwischen den einzelnen optischen Elementen können dann mehrere Gruppen von optischen Elementen, die jeweils verschiedenen Lichtflecken zugeordnet sind, im selben Flächenbereich ineinander verschachtelt angeordnet sein. Auf diese Weise kann eine besonders hohe räumliche Auflösung im Lichtfleckenbild erreicht werden, wie weiter unten genauer erläutert.

Als weiterer Vorteil der Zuordnung einer Mehrzahl von optischen Elementen zu einem Lichtfleck hat sich herausgestellt, dass aufgrund der dann möglichen geringeren Abmessungen der einzelnen optischen Elemente Elemente mit ebenen Begrenzungsflächen eingesetzt werden können, die einfacher zu berechnen und herzustellen sind als ein einziges gekrümmtes, optisches Element gleicher optischer Wirkung.

Um ein Lichtfleckenbild zu erzeugen, in dem die Lichtlecken unterschiedliche Helligkeiten aufweisen, ist vorteilhaft jedem Lichtfleck des Lichtfleckenbilds eine solche Anzahl von optischen Elementen zugeordnet, die der Helligkeit des Lichtflecks innerhalb des von den Lichtflecken gebildeten Motivs entspricht. Sind die optischen Elemente unterschiedlich groß, kann auch jedem Lichtfleck eine solche Gesamtfläche von optischen Elementen zugeordnet werden, die der Helligkeit des Lichtflecks innerhalb des von den Lichtflecken gebildeten Motivs entspricht.

Besonders bevorzugt sind die optischen Elemente durch ebene Mikrospiegel oder durch kleine Mikroprismen gebildet.

Das vorbestimmte Motiv kann auch ein Wechselbild sein, das aus unterschiedlichen Betrachtungsrichtungen unterschiedliche Bilder zeigt. Ein konkretes Beispiel für die Erzeugung eines solchen Wechselbilds ist weiter unten beschrieben. Es versteht sich, dass der Begriff "Wechselbilder" auch solche Bilder tunfasst, bei denen nur Bildteile dem Wechsel unterworfen sind.

Bei Wechselbildern ändern sich Bilder oder Bildpartien bei Änderung der Betrachtungsrichtung, insbesondere beim Kippen des Bildes; weswegen solche Bilder auch Kippbilder genannt werden. Der Wechsel kann beim waagrechten oder senkrechten Kippen erfolgen, oder beim Kippen in einer Richtung, die zwischen waagrecht und senkrecht liegt.

Wenn der Wechsel beim Bildinhalt abrupt erfolgt, spricht man von Flipbildern. Erfolgt der Wechsel über Zwischenstufen spricht man von Morphing-Bildern.

Weiterhin können auch 2D-3D-Bilder als Lichtfleckenbild ausgebildet werden. Dabei hat man neben 3-dimensional wirkenden Partien (die vor oder hinter der Ebene des Darstellungselements zu sehen sind oder die Ebene des Darstellungselements zu durchdringen scheinen) auch 2-dimensional wirkende Partien in oder nahe der Ebene des Darstellungselements (in der Höhenstufe 0 oder nahe der Höhenstufe 0)

Bei einem 2D-3D-Bild können 2D-und 3D-Partien nebeneinander liegen und/oder bei Änderung der Betrachtungsrichtung wechselweise am gleichen Ort erscheinen. Bei einem solchen 2D-3D-Wechselbild kann z.B. ein zweidimensionaler Bildinhalt (z.B. eine Schrift oder ein Logo) richtungsabhängig in ein 3D-Bild ein- und ausgeblendet werden.

In einer nicht unter den Anspruchsgegenstand fallenden Variante ist das von der Darstellungsanordnung erzeugte vorbestimmte Motiv ein durch die Lichtflecken gebildeter vollplastischer Körper.

Gemäß einer Weiterbildung der Erfindung kann der Flächenbereich, in dem die Mehrzahl optischer Elemente angeordnet ist, auch gekrümmt sein, beispielsweise zylindrisch oder sphärisch gekrümmt.

Bei einer weiteren Erfindungsvariante erzeugt eine Teilmenge der optischen Elemente eine versteckte Bildinformation, die ohne Hilfsmittel nicht erkennbar ist. Die versteckte Bildinformation steht dabei im Gegensatz zu der durch das oben beschriebene Lichtfleckenbild gebildeten offenen Bildinformation, die bei normaler Beleuchtung ohne weitere Hilfsmittel mit bloßem Auge erkennbar ist. Die versteckte Bildinformation ist dagegen bei normaler Beleuchtung nicht ohne weiteres mit bloßem Auge erkennbar, sondern wird beispielsweise nur bei gerichteter Beleuchtung mit Laserlicht sichtbar oder benötigt einen besonderen Auffangschirm.

In einer vorteilhaften Variante der Erfindung umfassen die optischen Elemente eine periodische Anordnung von Mikrospiegeln, die jeweils einen Abstand zum nächsten Nachbarn von 2 mm oder weniger, insbesondere von 1 mm oder weniger aufweisen. Ein Betrachter erkennt dann nicht mehr die Spiegelbilder der Spiegel, sondern sieht pro Spiegel nur einen Lichtpunkt, dessen Form von der Ausleuchtung der Umgebung abhängt. Kippt der Betrachter das Darstellungselement, so wandern die Lichtpunkte der Spiegel etwas zur Seite, und zwar je nach Auslegung der Spiegel als Hohl- oder Wölbspiegel so, als ob die Lichtpunkte vor oder vorzugsweise hinter der Ebene des Darstellungselements liegen würden. Durch die periodische Anordnung der Mikrospiegel sieht der Betrachter somit ein regelmäßiges Gitter von Lichtpunkten, die sich beim Kippen des Darstellungselements vorzugsweise so zu bewegen scheinen, als würden sie sich in einer weiter hinten liegenden Ebene befinden. Das Lichtpunkt-Gitter kann daher den Hintergrund für ein weiteres Motiv bilden, beispielsweise für den in der ebenfalls anhängigen deutschen Patentanmeldung DE 10 2009 056 934.0 beschriebenen Wölbeffekt, oder für eine Sägezahndarstellung mit kinematischen Effekt, wie etwa die Hologrammstrukturen der Druckschrift EP 0 868 313 B1 (dortiger Absatz, [0034] bzw. Fig. 8 mit reflektierenden Sägezahnstrukturen).

Um die optischen Elemente einerseits vor Versclunutzung und Abrieb zu schützen und um anderseits eine unbefugte Nachstellung durch Abprägen der Oberflächenstruktur wirksam zu verhindern, werden die optischen Elemente vorteilhaft in eine Umgebungsschicht oder einen Umgebungsschichtverbund, insbesondere in eine Schutzschicht eingebettet. Eine solche Einbettung verändert in der Regel die Schwebehöhe der Lichtflecken, da ein Brechungsindexunterschied zwischen Einbettungsmaterial und Luft bzw. Einbettungsmaterial und Linsenmaterial den optischen Strahlengang verändert. Eine solche Änderung des optischen Strahlengangs kann jedoch ohne weiteres bei der Auslegung der optischen Elemente entsprechend berücksichtigt werden, so dass nach der Einbettung die gewünschten Schwebehöhen verwirklicht werden.

In einer vorteilhaften Gestaltung sind die optischen Elemente als n-ägesti-ukturen in einer Prägelackschicht ausgebildet. Ist das Darstellungselement zumindest teilweise reflektierend ausgebildet, so sind die Prägestrukturen vorzugsweise mit einer reflexionserhöhenden Beschichtung versehen. Als reflexionserhöhende Beschichtung kommt insbesondere eine vollflächige oder gerasterte Metallisierung, eine hochbrechende Beschichtung, ein Dünnschichtelement mit Farbkippeffekt oder eine cholesterische Flüssigkristallschicht in Betracht.

Die Strukturhöhen der Prägestrukturen liegen vorzugsweise unterhalb von 100 $\mu$m, bevorzugt unterhalb von 20 $\mu$m, besonders bevorzugt unterhalb von 5 $\mu$m.

Die erfindungsgemäßen Darstellungselemente können mit anderen Sicherheitsmerkmalen kombiniert werden, beispielsweise mit diffraktiven Strukturen, mit Hologrammstrukturen in allen Ausführungsvarianten, metallisiert oder nicht metallisiert, mit Subwellenlängenstrukturen, metallisiert oder nicht metallisiert, mit Subwellenlängengittein mit Schichtsystemen, die beim Kippen einen Farbwechsel zeigen, semitransparent oder opak, mit diffraktiven optischen Elementen, mit refraktiven optischen Elementen, wie etwa Prismenstrahlformern, mit speziellen Lochformen, mit Sicherheitsmerkmalen mit gezielt eingestellter elektrischer Leitfähigkeit, mit eingearbeiteten Stoffen mit magnetischer Codierung, mit Stoffen mit phosphoreszierender, fluoreszierender oder lumineszierender Wirkung, mit Sicherheitsmerkmalen auf Grundlage von Flüssigkristallen, mit Mattstruuktitreit, mit zusätzlichen Mikrospiegelelementen, mit Elementen mit Jalousie-Effekt oder mit Sägezahnstrukturen. Weitere Sicherheitsmerkmale, mit denen die erfindungsgemäßen Darstellungselemente kombiniert werden können, sind in der Druckschrift WO 2005/052650 A2 auf Seiten 71 bis 73 angegeben; diese werden insoweit in die vorliegende Beschreibung aufgenommen.

Die Erfindung enthält auch ein Verfahren zum Herstellen eines refraktiven Darstellungselements der beschriebenen Art, welches ausgelegt und bestimmt ist, bei Beleuchtung ein Lichtfleckenbild aus einer Mehrzahl von Lichtflecken zu erzeugen, die für einen Betrachter oberhalb oder unterhalb des Flächenbereichs schwebend erscheinen und die in Form eines vorbestimmten Motivs angeordnet sind. Bei dem Verfahren wird ein Substrat bereitgestellt und wird in einem Flächenbereich des Substrats eine Mehrzahl refraktiver und/ oder reflektiver optischer Elemente angeordnet, wobei jedem Lichtfleck des Lichtfleckenbilds eine Mehrzahl von refraktiven und/oder reflektiven optischen Elementen zugeordnet wird, welche bei Beleuchtung des Darstellungselements zur Erzeugung des ihm zugeordneten Lichtflecks beitragen.

Gemäß einer vorteilhaften Verfahrensvariante wird

- ein gewünschtes dreidimensionales Motiv mit Bildpunkten Pj und Höhenwerten Zj über einer xy-Ebene vorgegeben, wobei die Bildpunkte den bei Beleuchtung entstehenden Lichtflecken entsprechen,
- wird für jeden Bildpunkt Pj eine Helligkeit $I_j$ zwischen 0% und 100% festgelegt,
- werden den Bildpunkten $P_j$ Öffnungskegel zugeordnet, die ein Öffnungsverhältnis > 0,2 aufweisen,
- wird für jeden Bildpunkt Pj durch einen Schnitt des von dem Bildpunkt ausgehenden Öffnungskegels mit der xy-Ebene ein Einzugsbereich Ej bestimmt,
- wird die xy-Ebene in eine Anzahl von Grobfeldern und die Grobfelder jeweils in eine Anzahl von Feinfeldern aufgeteilt,
- werden für jeden Bildpunkt $P_j$ auf Grundlage des festgelegten Höhenwerts $Z_j$ und des festgelegten Helligkeitswerts $I_j$ eine Anzahl an zu füllenden Feinfeldern bestimmt,
- werden die für den Bildpunkt $P_j$ bestimmten, zu füllenden Feinfelder im Wesentlichen gleichmäßig auf die Grobfelder im Einzugsbereich $E_j$ des Bildpunkts $P_j$ verteilt und
- werden die zu füllenden Feinfelder mit refraktiven und/oder reflektiven optischen Elementen belegt, die bei Beleuchtung des Darstellungselements zur Erzeugung des dem Bildpunkt $P_j$ entsprechenden Lichtflecks beitragen.

Gemäß einer nicht unter den Anspruchsgegenstand fallenden Variante wird ein vollplastischer Körper durch schwebende Lichtpunkte dargestellt. Dabei wird vorzugsweise von einen Datensatz ausgegangen, der die Oberfläche des darzustellenden Körpers durch Punkte im Raum, Eckpunkte von Polygonen, Normalenvektoren und Absorptionsverhalten (Farbe, Helligkeit) beschreibt.

Solche Datensätze, geeignete Datenformate und Bearbeitungsverfahren sind dem Fachmann grundsätzlich bekannt, Beispiele sind etwa VRML (Virtual Reality Modeling Language), STL (Surface Tesselation Language; Standard Triangulation Language) oder 3D-CAD (3D- Computer Aided Design).

Datensätze, die die Oberfläche eines Körpers beschreiben, können beispielsweise beim computerunterstützten technischen Zeichnen erzeugt werden oder durch 3D-Laser-Scanning echter dreidimensionaler Körper. Bei letzterem Verfahren werden beim Abtasten eines Körpers mit Laserstrahlen Punkte im Raum erfasst, die den Körper beschreiben. Diese Punkte können beispielsweise im sogenannten Point-Cloud-Format im Computer gespeichert werden.

Um ein 3D-Lichtflecken-Bild eines vollplastischen Körpers zu erzeugen, muss ein solcher Datensatz bearbeitet werden, wie im Folgenden anhand der Schritte a) bis c) beispielhaft beschrieben:

a) Beleuchtungskonzeption

Um die Körperoberfläche sichtbar zu machen sind Hell-Dunkel-Kontraste erforderlich. Am natürlichsten wirkt ein Körper, wenn man diese Hell-Dunkel-Kontraste mittels einer Beleuchtungskonzeption erzeugt. Dazu denkt man sich eine oder mehrere Lichtquellen außerhalb des Körpers angebracht und ermittelt mittels des Lambertschen Cosinus-Gesetzes, des Reflexions-Gesetzes oder anderer geeigneter physikalischer Gesetze aus den Richtungen der fiktiven Lichtquellen, der Oberflächennormalen und dem Absorptionsverhalten die Oberflächenhelligkeit an allen relevanten Punkten des Körpers.

b) Lichtpunkterzeugung

Wie weiter oben beschrieben werden jedem relevanten Körperpunkt Einzugsbereiche in einer Anordnung von Mikrospiegeln oder Mikroprismen zugeordnet. Innerhalb des Einzugsbereichs werden gewisse Flächenbereiche mit Mikrospiegeln oder Mikroprismen in der oben beschriebenen Weise so belegt, dass der Körperpunkt in der gewünschten Helligkeit leuchtet.

c) Verdeckinngsberechnung

Schließlich hat ein vollplastischer Körper aus einer Betrachtungsrichtung gesehen eine Vorder- und eine Rückseite, so dass manche Körperpartien verdeckt und unsichtbar sind. Daher ist für jedes Mikroelement (bzw. Mikrospiegel oder Mikroprisma) darauf zu achten, dass es nur dem Punkt der Körperoberfläche zugeordnet wird, der ihm auf der Verbindungsgeraden Mikroelement-Körperpunkt am nächsten oder entferntest liegt, je nachdem von welcher Seite das Lichtfleckenbild betrachtet werden soll. Diesen Punkt der Körperoberfläche bestimmt man durch Verfahren der Verdeckungsberechnung, wie sie aus 3D-CAD an sich bekannt sind, wie etwa Ray-Tracing oder Z-Buffer-Verfahren. Bezieht man auch eigentlich verdeckte Punkte in das Lichtfleckenbild ein, so erscheint der Körper durchsichtig, was in Ausnahmefällen allerdings ebenfalls gewünscht sein kann.

Die Erfindung enthält schließlich auch einen Datenträger mit einem Darstellungselement der beschriebenen Art, wobei das Darstellungselement insbesondere als ein reflektierendes Sicherheitselement in einem opaken Bereich des Datenträgers, oder als zumindest teilweise durchsichtiges Sicherheitselement in oder über einem transparenten Fensterbereich oder einer durchgehenden Öffnung des Datenträgers angeordnet sein kann. Bei dem Datenträger kann es sich insbesondere um ein Wertdokument, wie eine Banknote, insbesondere eine Papierbanknote, eine Polymerbanknote oder eine Folienverbundbanknote handeln, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung enthält weiter eine Anzeigeeinrichtung mit einer Steuereinrichtung und einem Darstellungselement der oben beschriebenen Art, wobei die räumliche Ausrichtung der optischen Elemente des Darstellungselements durch die Steuereinrichtung einstellbar ist. Auf diese Weise kann das Darstellungselement je nach Ansteuerung unterschiedliche Lichtfleckenbilder zeigen. Die Änderung der räumlichen Ausrichtung der optischen Elemente kann dabei sehr rasch erfolgen, so dass für den Betrachter der Eindruck einer fortlaufenden Bildfolge entsteht. Die Anzeigeeinrichtung kann somit als 3D-Display für unterschiedlichste Anwendungen eingesetzt werden.

Schließlich enthält die Erfindung ein Verfahren zum Herstellen eines Volumenhologramms, bei dem in einer Aufzeichnungsplatte, beispielsweise einer Photopolymerplatte, als Referenzwelle ungestreute Laserstrahlung und als Objektwelle die von einem Darstellungselement der oben beschriebenen Art reflektierte oder abgelenkte Laserstrahlung zur Interferenz gebracht werden. Dabei wird bei Darstellungselementen mit reflektiven optischen Elementen, wie etwa Mikrospiegeln, die reflektierte Laserstrahlung als Objektwelle genutzt, während bei Darstellungselementen mit refraktiven optischen Elementen, wie etwa Mikroprismen, die abgelenkte Laserstrahlung als Objektwelle genutzt wird.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1     eine schematische Darstellung einer Banknote mit einem erfindungsgemäßen Sicherheitselement,

Fig. 2     schematisch ein erster Ausführungsbeispiel mit Hohlspiegeln als reflektive optische Elemente,

Fig. 3     ein anderes Ausführungsbeispiel mit Wölbspiegeln als reflektive optische Elemente,

Fig. 4     ein vorgegebenes Lichtflecken-Motiv in Form einer dreidimensionalen Lichtpyramide,

Fig. 5    in (a) einen Wölbspiegel und in (b) der durch einen Fresnel-Spiegel ersetzte Wölbspiegel von (a),

Fig. 6    eine Aufsicht auf eine Mehrzahl von gewölbten Spiegeln, in (a) mit Spiegeln mit quadratischer Grundfläche und in (b) mit rimmenförmig ausgebildeten Spiegeln verschiedener Orientierung,

Fig. 7    ein weiteres Ausführungsbeispiel, bei dem die refraktiven optischen Elemente durch Linsen gebildet sind,

Fig. 8    in (a) bis (d), vier Ausführungsbeispiele, bei denen ein gekrümmter Hohlspiegel in Mikrooptikelemente mit quadratischer Grundfläche und ebener Spiegelfläche zerlegt ist,

Fig. 9    die Belegung einer schachbrettartigen Anordnung nach Fig. 8(b) mit Mikrospiegeln, wobei (a) einen Zwischenschritt mit nur einer Mikrospiegelgruppe und (b) die vollständige Belegung mit zwei Mikrospiegelgruppen für zwei nahe benachbarte Lichtflecken zeigt

Fig. 10    veranschaulicht die Berechnung der ebenen Spiegelflächen der Mikrospiegel der Figuren 8 und 9,

Fig. 11    veranschaulicht die Berechnung von Mikroprismen, die bei der Zerlegung einer Sammellinse entstehen,

Fig. 12    zeigt schematisch ein Sicherheitselement mit eingebetteten Mikrospiegeln, und

Fig. 13    zeigt in (a) bis (c) drei Ausgestaltungen, in denen ein erfindungsgemäßes Lichtfleckenbild als Master für ein Volumenhologramm dient.

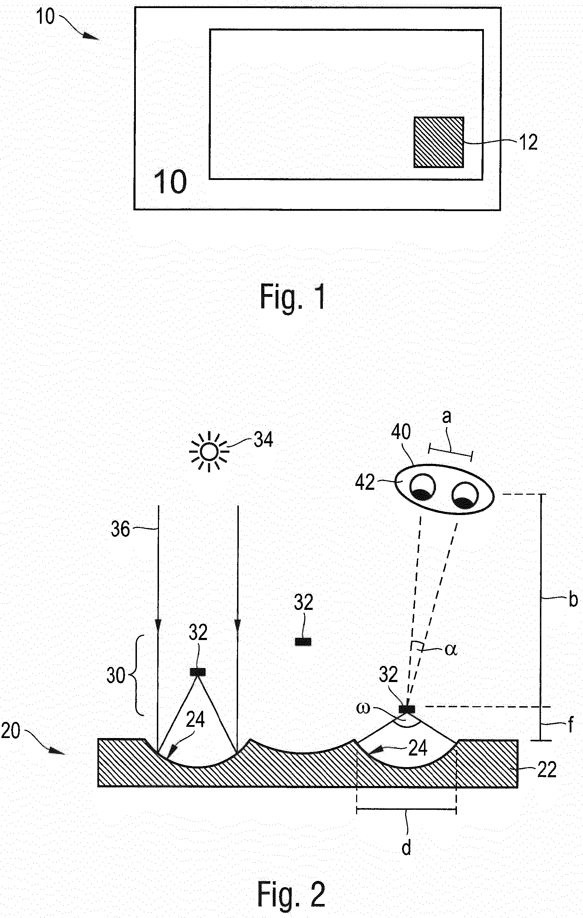

Die Erfindung wird nun am Beispiel von Sicherheitselementen für Banknoten erläutert. Figur 1 zeigt dazu eine schematische Darstellung einer Banknote 10, die mit einem erfindungsgemäßen Sicherheitselement 12 versehen ist. Das Sicherheitselement 12 kann als reflektierendes Sicherheitselement ausgebildet sein, das in einem opaken Bereich der Banknote 10 vorliegt, oder kann als Durchsichtssicherheitselement ausgebildet sein, das beispielsweise über einem transparenten Fensterbereich der Banknoten 10 angeordnet ist.

Bei Beleuchtung, beispielsweise durch Sonnenlicht oder eine Deckenlampe, erzeugt das Sicherheitselement 12 für einen Betrachter ein dreidimensionales Lichtfleckenbild aus einer Mehrzahl von Lichtflecken, die für einen Betrachter jeweils oberhalb oder unterhalb der Ebene des Sicherheitselements 12 zu schweben scheinen. Verschiedene Lichtflecken weisen dabei unterschiedliche Schwebehöhen auf, so dass die Lichtflecken zusammen ein dreidimensionales Motiv, beispielsweise eine aus der Banknote herausragende Lichtpyramide, bilden.

Diese durch die Beleuchtung entstehenden und aus der Banknote vor- oder zurückspringenden Lichtfleckenbilder bieten dem Betrachter einen ungewöhnlichen, visuell ansprechenden dreidimensionalen Bildeindruck, der auch für Laien leicht zu prüfen und zu memorieren ist.

Zur Erläuterung des Erfindungsprinzips zeigt Fig. 2 ein erstes Ausführungsbeispiel eines Sicherheitselements 20, bei dem das dreidimensionale Motiv 30 vereinfacht durch drei Bildpunkte 32 dargestellt ist. Das Sicherheitselement 20 enthält ein Substrat 22, das in einem Flächenbereich eine Mehrzahl von kleinen Holllspiegeln 24 enthält. Da in der Figur vereinfacht nur drei Bildpunkte 32 des Motivs dargestellt sind, sind entsprechend auch nur drei Hohlspiegel 24 gezeigt. Es versteht sich jedoch, dass ein Sicherheitselement 20 in der Praxis typischerweise eine große Zahl, beispielsweise einige Zehn, einige Hundert oder sogar mehrere Tausend refraktiver und/oder reflektiver optischer Elemente 24 aufweisen wird. Konkrete Beispiele für Sicherheitselemente mit einer großeii Zahl an optischen Elementen sind weiter unten beschrieben.

Zurückkommend auf die Darstellung der Fig. 2 ist die Brennweite f der in der Ebene des Substrats 22 angeordneten Hohlspiegel 24 jeweils so gewählt, dass die Hohlspiegel 24 bei Beleuchtung mit einer weit entfernten Lichtquelle 34 die vorgegebenen Bildpunkte als Lichtflecken 32 erzeugen. Genauer gesagt stellen die Lichtflecken 32 reelle Bilder der Lichtquelle dar, wie im linken Bildteil der Fig. 2 durch den geometrischen Strahlengang 36 angedeutet.

Ein dreidimensionaler Bildeindruck, also die Wahrnehmung des Betrachters 40, dass die Lichtflecken 32 in einer bestimmten Höhe über der Fläche des Substrats 22 schweben, entsteht erst durch beidäugiges Sehen. Dazu muss durch die Auslegung der Hohlspiegelanordnung sichergestellt sein, dass die reellen Bilder 32 der Lichtquelle 34 jeweils für beide Augen 42 innerhalb der Öffnung des maßgeblichen optischen Systems, hier also eines Hohlspiegels 24, liegen.

Wie im rechten Bildteil von Fig. 2 illustriert, liegt ein Lichtfleck 32 genau dann für beide Augen 42 innerhalb der Öffnung des Hohlspiegels 24, wenn vom Lichtfleck 32 aus gesehen der Öffnungswinkel $\omega$ des Hohlspiegels 24 größer ist als der Betrachtungswinkel a des Betrachters 40. Der Öffnungswinkel $\omega$ ist dabei durch das Verhältnis von Spiegeldurclunesser d und Brennweite f gegeben, $\omega = d/f$ und der Betrachtungswinkel a durch das Verhältnis von Augenabstand a und Betrachtungsabstand b, also a = a/b. Für einen typischen Augenabstand a $\approx$ 6,5 cm und einen typischen Betrachtungsabstand b $\approx$ 30 cm erhält man so die Bedingung

$$f/d < b/a \approx 5,$$

also die Bedingung, dass das Verhältnis der Schwebehöhe f eines Lichtflecks 32 zum Durchmesser des den Lichtfleck erzeugenden Hohlspiegels 24 kleiner als etwa 5 sein muss. Beträgt der Durchmesser der Hohlspiegel 24, wie im Ausführungsbeispiel der Fig. 2, beispielsweise d = 0,5 mm, so lassen sich Schwebehöhen bis zu 2,5 mm mit dreidimensionalem Bildeindruck realisieren.

Die refraktiven und/ oder reflektiven optischen Elemente können Abmessungen von einigen 100 $\mu$m oder sogar einigen Millimeter aufweisen, können aber auch deutlich kleiner ausgebildet sein. Beispielsweise kann ein Holllspiegel in eine Vielzahl von Mikrospiegeln zerlegt und diese über einen bestimmten Flächenbereich des Substrats 22 verteilt sein, wie weiter unten näher erläutert. In jedem Fall liegt die Abmessung eines erfindungsgemäß eingesetzten optischen Elements jedoch deutlich oberhalb der Lichtwellenlänge, so dass Beugungs- und Interferenzeffekte vernachlässigt werden können. Insbesondere liegt die Abmessung der optischen Elemente daher vorteilhaft oberhalb von 2 $\mu$m, vorzugsweise sogar oberhalb von 5 $\mu$m.

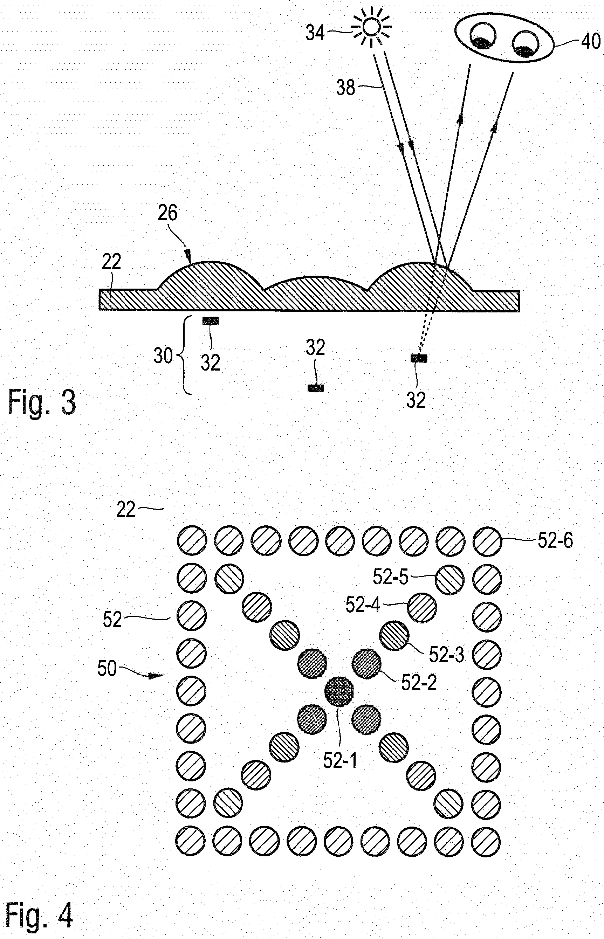

Die Lichtflecken 32 des vorgegeben Motivs 30 können für den Betrachter 40 nicht nur oberhalb, sondern auch unterhalb der Oberfläche 22 des Substrats schweben. Mit Bezug auf Fig. 3 sind dazu in einem Flächenbereich des Substrats 22 eine Mehrzahl kleiner Wölbspiegel 26 angeordnet, deren Brennweiten so gewählt sind, dass die Wölbspiegel 26 bei Beleuchtung mit einer weit entfernten Lichtquelle 34 die vorgegebenen Bildpunkte als Lichtflecken 32 erzeugen. Genauer gesagt stellen die Lichtflecken 32 in diesem Fall virtuelle Bilder der Lichtquelle 34 dar, die für den Betrachter unterhalb der Oberfläche des Substrats zu schweben scheinen, wie im rechten Bildteil der Fig. 3 durch den geometrischen Strahlengang 38 angedeutet.

Hohl- und Wölbspiegel können auch beide im selben Sicherheitselement vorgesehen sein, wenn Teile des Motivs vorspringen, andere Teile hinter die Substratoberfläche zurücktreten sollen. Zur Illustration zeigt Fig. 4 ein vorgegebenes Motiv in Form einer dreidimensionalen Lichtpyramide 50 aus einer Mehrzahl von Lichtflecken 52, die in verschiedenen Schwebehöhen über bzw. unterhalb der Oberfläche des Substrats 22 schweben.

Im Ausführungsbeispiel der Fig. 4 sind alle gewölbten Spiegel mit einem Durchmesser von 0,5 mm ausgeführt. Die Brennweite f wird bei Hohldspiegeln positiv angegeben (Schwebehöhe über der Substratoberfläche), bei Wölbspiegeln negativ (Schwebehöhe unter der Substratoberfläche). Mit dieser Konvention weist der Lichtfleck 52-1 der Pyramidespitze eine Schwebehöhe von f = + 2 mm auf, während die Lichtflecke 52-2 und 52-3 der Pyramidenkanten in einer Höhe f = + 1,2 mm bzw. f = + 0,4 mm schweben. Die Lichtflecke 52-1 bis 52-3 mit ihren positiven Schwebehöhen werden durch Hohlspiegel erzeugt, wie grundsätzlich bereits bei Fig. 2 erläutert.

In der Pyramide 50 weiter nach außen gehend weisen die Lichtflecken 52-4 und 52-5 eine Schwebehöhe von f = - 0,4 mm bzw. f = - 1,2 mm auf, schweben für den Betrachter also unterhalb der Substratoberfläche 22. Die Pyramidenbasis ist schließlich aus Lichtflecken 52-6 gebildet, die eine Schwebehöhe von f = - 2 mm aufweisen und damit 4 mm unterhalb der Pyramidenspitze 52-1 liegen.

Für alle Lichtflecken 52 ist die Bedingung |f|/d < 5 erfüllt, so dass die Pyramide 50 für den Betrachter bei normalem Betrachtungsabstand echt dreidimensional erscheint und die Substratebene von unten nach oben zu durchstoßen scheint.

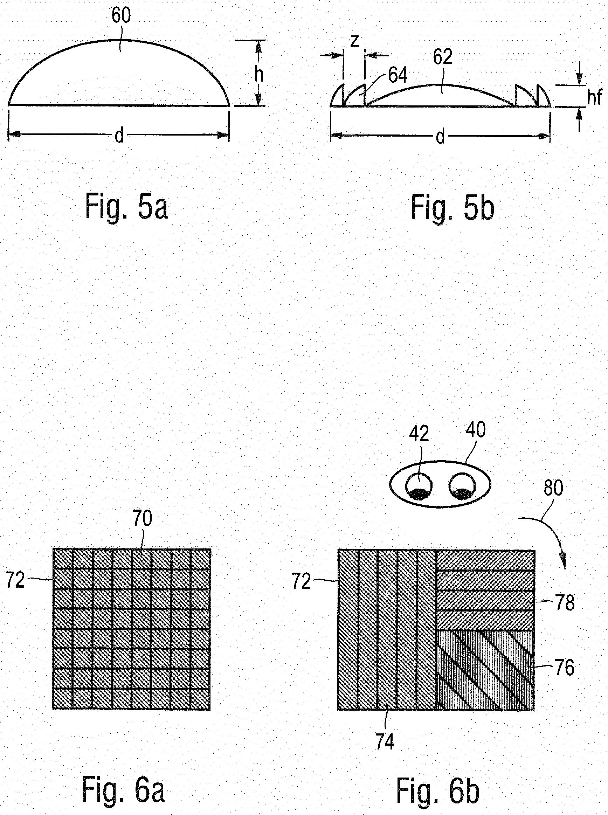

Die Schwebehöhe der Lichtflecken wird durch den Krümmungsradius der gewölbten Spiegel bestimmt, wie in Fig. 5(a) beispielhaft für einen Wölbspiegel 60 gezeigt, Bei einem Durchmesser d und einem Krümmungsradius r hat der Wölbspiegel 60 eine Brennweite von f = r/2. Beispielsweise ist bei einem Spiegeldurchmesser d = 0,5 mm für eine Brennweite bzw. Schwebehöhe von f = 2 mm ein Krümmungsradius von r = 4 mm erforderlich. Die Strukturhöhe des Wölbspiegels ergibt sich in diesem Fall über die Beziehung h*(2r-h) = (d/2)$^2$ zu h = 7,8 $\mu$m.

Je nach gewünschter Schwebehöhe können dabei Spiegelstrukturen entstehen, deren Höhe h für eine gewünschte Anwendung zu groß ist, beispielsweise weil eine maximal zulässige Prägehöhe oder Prägetiefe in einer geprägten Schicht überschritten wird. In diesem Fall kann der Wölbspiegel 60 der Fig. 5(a) durch einen entsprechenden Fresnel-Spiegel 62 ersetzt werden, der eine wesentlich geringere Strukturhöhe $h_f$ aufweist, wie in Fig. 5(b) gezeigt. Die Zonenbreiten z der Fresnel-Zonen 64 können dabei beliebig gewählt werden, solange sie groß gegen die Lichtwellenlänge sind, insbesondere solange z > 2 $\mu$m ist. Ansonsten spielt die Breite z der Fresnel-Zonen 64 für die optische Wirksamkeit des Fresnel-Spiegels 62 keine Rolle.

Haben die gewölbten Spiegel eines Sicherheitselements mehrere verschiedene Brennweiten, weisen die Lichtflecken des Lichtfleckenbilds also mehrere verschiedene Schwebehöhen oberhalb und/oder unterhalb der Substratoberfläche auf, so entsteht ein echt dreidimensionales Motiv. In erfindungsgemäßen Gestaltungen kann es sich jedoch auch anbieten, alle gewölbten Spiegel mit derselben Brennweite auszubilden, so dass alle Lichtflecken des Lichtfleckenbilds dieselbe Schwebehöhe aufweisen. Auf diese Weise entsteht ein Kulissenmotiv, das in einer bestimmten Höhe oberhalb oder unterhalb der Substratoberfläche schwebt.

Die gewölbten Spiegel müssen nicht sphärisch gekrümmt sein. Als erfindungsgemäße optische Elemente können beispielsweise auch elliptische Hohl- oder Wölbspiegel eingesetzt werden, die in x- und y-Richtung eine unterschiedliche Spiegelkrümmung aufweisen. Da die Brennweite f eines gewölbten Spiegels nach dem oben Gesagten proportional zum Krümmungsradius r ist, verändert sich beim Drehen eines elliptisch gewölbten Spiegels die Schwebehöhe f des zugehörigen Lichtflecks für den Betrachter.

Enthält ein vorgegebenes Motiv zumindest teilweise elliptische Hohl- oder Wölbspiegel, so erheben sich die Lichtflecken in den Brennebenen der jeweiligen Partien beim Drehen der Anordnung vor dem Hintergrund bzw. senken sich in den Hintergrund ab. Dieser Effekt tritt besonders auffällig hervor, wenn die beim Drehen aufsteigenden bzw. absinkenden Lichtflecken mit sich bei Drehen nicht verändernden Lichtflecken kombiniert werden, die für das Auge einen ruhenden Bezugspunkt darstellen.

Mit Bezug auf die Aufsicht der Fig. 6(a) kann die Mehrzahl an gewölbten Spiegeln 70 beispielsweise mit rechteckiger oder quadratischer Grundfläche in einem Flächenbereich 72 des Sicherheitselements angeordnet sein.

Für einen dreidimensionalen Bildeindruck für einen Betrachter genügt bereits eine seitliche Parallaxe, also eine Parallaxe entlang der Verbindungslinie der beiden Augen 42 des Betrachters 40. Die gewölbten Spiegel 74, 76, 78 können daher auch rinnenförmig ausgebildet sein, wie der Aufsicht der Fig. 6(b) gezeigt. Rinnenförmige gewölbte Spiegel weisen nur in einer Richtung, nämlich senkrecht zur Rinne, eine von Null verschiedene Krümmung auf, während die Krümmung in Rinnenrichtung verschwindet.

Mit einem aus rinnenförmigen gewölbten Spiegeln 74, 76, 78 aufgebauten Bild lassen sich ebenfalls attraktive visuelle Effekte verwirklichen. Die Lichtflecke erscheinen dabei bei geeignetem Betrachtungswinkel über oder unter der Substratoberfläche schwebend in Form von in der Luft hängenden leuchtenden Strichen.

Wegen der nebeneinander liegenden Augen ergibt sich bei einem 3D-Rinnenbild bei senkrecht zur Verbindungslinie der Augen 42 verlaufenden Rinnen 74 die stärkste räumliche Wirkung. Jedoch haben auch schräg verlaufende Rinnen 76 einen senkrechten Anteil und erzeugen damit ebenfalls ein Lichtfleckenbild mit dreidimensionaler Wirkung.

Wenn man ein Bild mit schräg in der Bildebene liegenden Rinnen 76 so dreht (80), dass die Rinnen senkrecht stehen, verstärkt sich die dreidimensionale Wirkung. Dreht der Betrachter die Rinnen 76 dagegen in die Waagrechte, so reduziert sich der dreidimensionale Eindruck. Bei einem Sicherheitselement, das wie in Fig. 6(b) gezeigt, Teilbereiche mit verschiedener Orientierung der Rinnen 74, 76, 78 enthält, erheben sich die Lichtflecken der jeweiligen Teilbereiche beim Drehen (80) der Anordnung vor dem Hintergrund bzw. senken sich in den Hintergrund ab.

Unter rinnenförmigen gewölbten Spiegeln sind dabei sowohl rinnenförmige Hohlspiegel als auch rinnenförmige Wölbspiegel zu verstehen. Rinnenförmige Hohlspiegel erzeugen Lichtflecke, die über der Substratoberfläche schweben, während rinnenförmige Wölbspiegel Lichtflecke erzeugen, die unterhalb der Substratoberfläche schweben.

Weiter müssen die rinnenfönnigen gewölbten Spiegel nicht gradlinig verlaufen, wie in Fig. 6(b) gezeigt, sondern sie können auch krummlinig angelegt sein. Auch durch eine solche Gestaltung lassen sich attraktive visuelle Effekte verwirklichen.

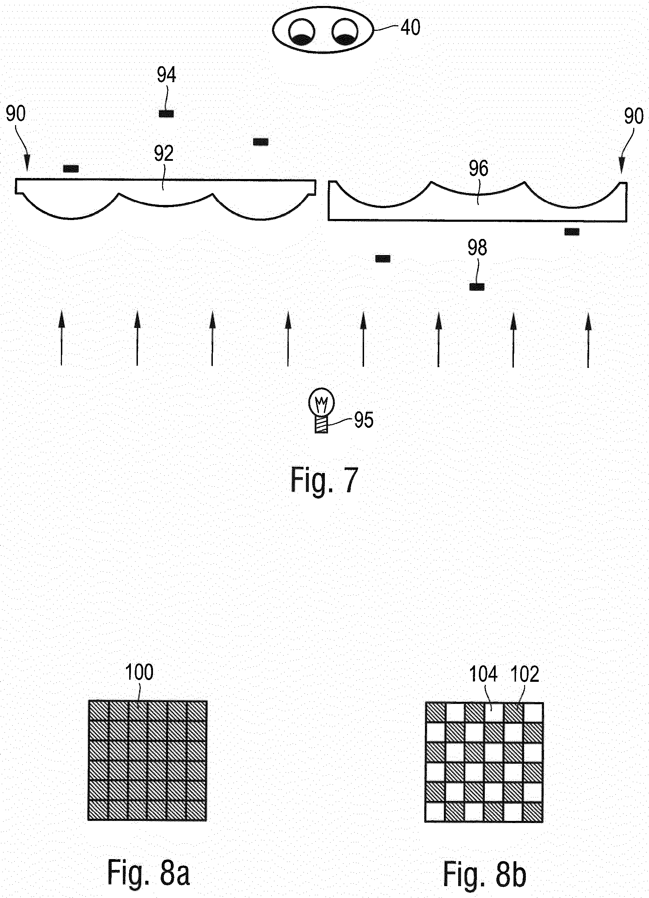

Bei einer weiteren, in Fig. 7 illustrierten Variante sind die optischen Elemente anstelle von reflektierenden Spiegeln durch lichtbrechende (refraktive) Linsen gebildet. Das refraktive Sicherheitselement 90 stellt in diesem Fall ein Durchsichtssicherheitselement dar, das vom Betrachter 40 in Durchsicht gegen eine idealerweise weit entfernte Lichtquelle 95 auf Echtheit geprüft wird.

Als Linsen kommen sowohl Sammellinsen 92 als auch Zerstreuungslinsen 96 in Betracht, wobei, vom Betrachter 40 aus gesehen, die konvexen Sammellinsen 92 als reelle Bilder über dem Sicherheitselement 90 schwebende Lichtflecken 94 erzeugen, und die konkaven Zerstreuungslinsen 96 als virtuelle Bilder unterhalb des Sicherheitselements 90 schwebende Lichtflecken 98 erzeugen.

Die Linsen können insbesondere sphärisch, elliptisch oder zylindrisch sein. Zylinderlinsen ergeben strichartige Lichtflecke, bei elliptischen Linsen ändert sich die Schwebehöhe der Lichtflecken beim Drehen des Sicherheitselements, wie oben für elliptische Spiegel bereits beschrieben. Für die in Fig. 7 dargestellten plankonvexen bzw. plankonkaven Linsen 92, 96 gilt für den Durchmesser d, den Krümmungsradius r, die Brennweite f und die Linsenhöhe h bei einem Brechungsindex des Linsenmaterials von n = 1,5 für an Luft grenzende Linsen:

$$f = 2*r$$

und

$$h*(2r\text{-}h) = (d/2)^2$$

Bei gegebenem Linsendurchmesser d und gegebener gewünschter Schwebehöhe f können damit der Krümmungsradius r und Strukturhöhe h der Linse bestimmt werden. Ist die Strukturhöhe einer Linse für eine gewünschte Anwendung zu groß, können die Linsen auch durch entsprechende Fresnellinsen ersetzt werden, wie im Zusammenhang mit Fig. 5 für Fresnel-Spiegel beschrieben. Auch hier ist darauf zu achten, dass die Zonenbreiten der Fresnel-Zonen groß gegen die Lichtwellenlänge sind, ansonsten aber beliebig gewählt werden können.

Bei den bisher beschriebenen Ausführungsbeispielen ist jedem Lichtfleck des Lichtfleckenbilds genau ein optisches Element zugeordnet, das bei Beleuchtung diesen Lichtfleck erzeugt, nämlich ein Hohlspiegel 24 (Fig. 2), ein Wölbspiegel 26 (Fig. 3), eine Sammellinse 92 oder eine Zerstreuungslinse 96 (Fig. 7). Die im Lichtfleckenbild erreichbare Auflösung, also der minimale Abstand zweier Lichtflecken im Lichtfleckenbild, ist bei einer solchen Gestaltung jedoch auf den Durchmesser d der gewölbten Spiegel oder Linsen beschränkt. Dieser Durchmesser ist wiederum über die oben genannte Bedingung für einen dreidimensionalen Bildeindruck $f / d < 5$ an die Schwebehöhe der Lichtflecken gekoppelt. Eine hohe Auflösung im Lichtfleckenbild ist somit nur für geringe Schwebehöhen und damit einer geringen dreidimensionalen Wirkung erreichbar.

Um dennoch eine höhere Auflösung im erzeugten Lichtfeckenbild bei unverändert großer Schwebehöhe zu erhalten, werden die in den bisherigen Ausführungsbeispielen verwendeten großen Spiegel oder Linsen jeweils durch eine Mehrzahl von kleineren Mikrospiegeln oder Mikroprismen ersetzt, die zusammen im Wesentlichen dieselbe optische Wirkung wie das ursprüngliche optische Element haben. Der einfacheren Benennung halber werden Mikrospiegel und Mikroprismen nachfolgend gemeinsam als Mikrooptikelemente bezeichnet.

Jedem Lichtfleck des Lichtfleckenbilds ist dann eine Mehrzahl von optischen Elementen in Form von Mikrooptikelementen zuordnet. Die höhere Auflösung im Lichtfleckenbild wird dabei dadurch erreicht, dass die Mikrooptikelemente nicht lückenlos nebeneinander, sondern im Abstand auf dem Flächenbereich verteilt werden, Die Zwischenräume der optischen Elemente eines Lichtflecks können dann mit optischen Elementen belegt werden, die anderen Lichtfecken zugeordnet sind. Auf diese Weise können mehrere Gruppen von Mikrooptikelementen, die jeweils verschiedenen Lichtflecken zugeordnet sind, im selben Flächenbereich ineinander verschachtelt angeordnet werden.

Der minimale Abstand zweier Lichtflecken im Lichtfleckenbild ist dann nicht mehr durch die Abmessung der ursprünglichen großen Spiegel oder Linsen gegeben, sondern durch die viel kleineren Abmessungen der Mikrooptikelemente, in die die ursprünglichen Spiegel oder Linsen zerlegt sind.

Zudem können bei der Zerlegung eines gewölbten Spiegels oder einer gekrümmten Linse in eine Mehrzahl von Mikrooptikelemente die im Prinzip zunächst ebenfalls gekrümmten Oberflächen der Mikrooptikelemente wegen ihrer geringen Größe in der Regel durch ebene Flächen ersetzt werden. Diese Ersetzung bleibt insbesondere wenn die Abmessungen der Mikrooptikelemente kleiner als das Auflösungsvermögen der Betrachtungssituation sind, ohne nachteilige Auswirkungen auf das erzeugte Lichtfleckbild. Als Vorteil ergibt sich, dass Mikrooptikelemente mit ebenen Oberflächen einfacher zu berechnen und herzustellen sind. Unter diesem Gesichtspunkt kann es sich sogar dann empfehlen, gewölbte Spiegel oder Linsen in kleine Mikrooptikelemente mit ebenen Oberflächen zu zerlegen, wenn keine Verschachtelung mehrerer Gruppen von Mikrooptikelementen gewünscht oder notwendig ist.

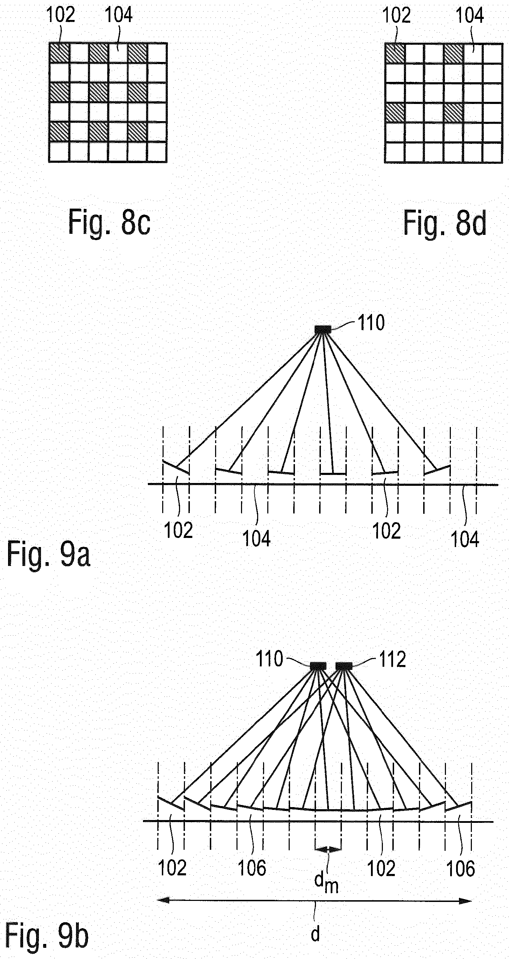

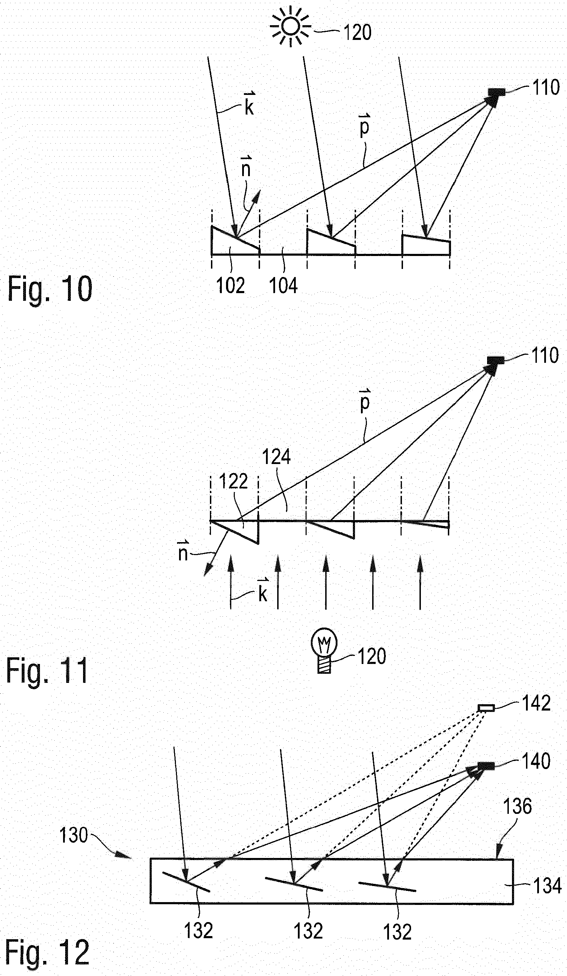

Zur illustration zeigt Fig. 8 in (a) bis (d) vier Ausführungsbeispiele, bei denen ein gekrümmter Hohlspiegel in Mikrooptikelemente 100 mit quadratischer Grundfläche und ebener Spiegelfläche zerlegt ist. Bei dem Ausführungsbeispiel der Fig. 8(a) ist ein Hohlspiegel zur Erzeugung eines Lichtflecks durch eine Anordnung aus n x n Mikrospiegeln 100 ersetzt, die ohne Abstand in der Fläche des Sicherheitselements nebeneinander angeordnet sind. Die Mikrospiegel 100 weisen beispielsweise eine Abmessung von 50 $\mu$m x 50 $\mu$m auf und können mit ebener Spiegelfläche ausgebildet werden, ohne die Abbildungsqualität zu beeinträchtigen. Die Anzahl n x n der Mikrospiegel beträgt beispielsweise 10 x 10, so dass die Mikrospiegel eine Gesamtfläche von 0,5 mm x 0,5 mm einnehmen. Die Berechnung der Orientierung der ebenen Spiegelflächen ist weiter unten mit Bezug auf Fig. 10 erläutert. Wie für den Fachmann ersichtlich, ist die Berechnung und Herstellung der ebenen Mikrospiegel 100 wesentlich einfacher als die Berechnung und Herstellung eines gekrümmten Hohlspiegels gleicher optischer Wirkung.

Das Ausführungsbeispiel der Fig. 8(b) zeigt eine Gestaltung, bei der ein gekrümmter Hohlspiegel zunächst wie bei Fig. 8(a) durch eine Mehrzahl von Mikrospiegeln 102 mit ebener Spiegelfläche ersetzt ist. Die Mikrospiegel 102 sind allerdings schachbrettartig im Flächenbereich des Sicherheitselements angeordnet, so dass jede zweite Spiegelposition frei bleibt. Diese zunächst unbelegten und in der Figur weiß dargestellten Felder 104 können dann mit Mikrospiegeln belegt werden, die einem anderen Lichtfleck zugeordnet sind.

Die Auflösung des Lichtfleckenbilds kann durch eine solche Verschachtelung von Mikrospiegel-Gruppen deutlich erhöht werden: Sollen beispielsweise zwei Lichtflecken, die in 5 mm Höhe schweben, nur 0,2 mm nebeneinander liegen, so werden dazu gewölbte Spiegel oder Linsen mit einer Brennweite $f = 5$ mm benötigt. Wie oben beschrieben, müssen der Durchmesser und die Brennweite der optischen Elemente für eine dreidimensionale Wirkung der Bedingung $f/ d < 5$ genügen, woraus sich bei den gemachten Vorgaben ein Optikdurchmesser $d > 1$ mm ergibt. Nebeneinander liegende gewölbte Spiegel oder Linsen müssten also mehr als 1 mm beabstandet sein, so dass sich die geforderte Auflösung von 0,2 mm auf diese Weise nicht erreichen lässt.

Wird dagegen eine Zerlegung wie in Fig. 8(b) verwendet, bei der nur jedes zweite Feld mit 50 $\mu$m x 50 $\mu$m großen Mikrospiegeln 102 zur Erzeugung des ersten Lichtflecks genutzt wird, können die dazwischen liegenden Felder 104 mit Mikrospiegeln belegt werden, die einen zweiten, 0,2 mm daneben liegenden Lichtfleck erzeugen. Die Bedingung $f/ d < 5$ fordert einen Optikdurchmesser von mehr als 1 mm, was beispielsweise durch eine schachbrettartige Anordnung von 12 x 12 Mikrospiegeln 102 mit 12 x 12 freien Feldern 104 und damit $d = 2*12*50$ $\mu$m = 1,2 mm erreicht werden kann. Der minimale Abstand des von der Mikrospiegelgruppe 102 erzeugten Lichtflecks und des zweiten Lichtflecks, der von den in den Feldern 104 angeordneten Mikrospiegeln erzeugt wird, beträgt nunmehr 50 μm, so dass die geforderte Auflösung von 0,2 mm ohne weiteres erreicht werden kann.

Die Belegung einer schachbrettartigen Anordnung nach Fig. 8(b) mit Mikrospiegeln ist in Fig. 9 in einer Schnittdarstellung nochmals illustriert.

Mit Bezug auf Fig. 9(a) wird jedes zweite Feld mit 50 μm x 50 μm großen Mikrospiegeln 102 zur Erzeugung des ersten Lichtflecks 110 belegt. Die Mikrospiegel 102 bilden eine Gruppe von Mikrospiegeln, die alle demselben Lichtfleck 110 zuordnet sind und diesen bei Beleuchtung gemeinsam erzeugen.

Die zwischen den Mikrospiegeln 102 liegenden Felder 104 stellen für die Belegung mit Mikrospiegeln, die anderen Lichtflecken zugeordnet sind, zur Verfügung. Im Extremfall können die Felder 104 mit Mikrospiegeln 106 belegt werden, die der Erzeugung eines Lichtflecks 112 dienen, der nur einen Mikrospiegeldurchmesser $d_m$, im Ausführungsbeispiel also 50 μm, von dem ersten Lichtfleck 110 entfernt ist, wie in Fig. 9(b) illustriert.

Wie aus Fig. 9 ersichtlich, ist der Optikdurchmesser d der Mikrospiegel-gruppen 102, 106 bei der alternierenden Spiegelanordnung durch d = 2\*n\*$d_m$ gegeben, wobei n die Anzahl der Mikrospiegel einer Gruppe in einer Raumrichtung darstellt. Durch geeignete Wahl von n kann daher der Optikdurchmesser d trotz der hohen Auflösung $d_m$ stets groß genug gemacht werden, um die Bedingung f/ d < 5 zu erfüllen.

Zurückkommend auf die Darstellung der Fig. 8 versteht sich, dass die Belegung des Flächenbereichs des Sicherheitselements je nach der gewünschten Anzahl der zu verschachtelnden Gruppen von Mikr oopttikelementen gewählt werden kann. Beispielsweise kann auch nur jedes vierte Feld mit Mikrospiegeln 102 belegt werden, die einem bestimmten Lichtfleck zugeordnet sind, wie in Fig. 8(c) illustriert. Die in der Figur weiß dargestellten, zunächst noch freien Felder 104 können dann mit Mikrospiegeln belegt werden, die bis zu drei anderen Lichtflecken zugeordnet sind. In einer weiteren Gestaltung ist jedes neunte Feld mit den einem bestimmten Lichtfleck zugeordneten Mikrospiegeln 102 belegt, wie in Fig. 8(d) gezeigt. Die in der Figur weiß dargestellten, zunächst noch freien Felder 104 können dann mit Mikrospiegeln belegt werden, die bis zu acht anderen Lichtflecken zugeordnet sind.

Die Berechnung der ebenen Spiegelflächen der Mikrospiegel ist in Fig. 10 veranschaulicht. Gezeigt sind im Querschnitt einige der Mikrospiegel 102 und der dazwischen liegenden, freien Felder 104 einer Gestaltung nach den Figuren 8(b) und 9(a).

Für die Berechnung bezeichnet $(x_0, y_0, z_0)$ die Position des zu erzeugenden Lichtflecks 110 mit $z_0 > 0$, $(x,y,0)$ die Position des zu berechnenden Spiegelelements. $\vec{n}$ ist der Normalenvektor des Spiegels an der Position $(x,y,0)$, $\vec{k}$ der Richtungsvektor des einfallenden Lichtstrahls und $\vec{p}$ der Richtungsvektor des reflektierten Lichtstrahls.

Zu bestimmten ist jeweils die Lage des Spiegelflächen, also der Normalenvektor $\vec{n}$ so, dass das aus einer vorgegebenen Richtung $\vec{k}$ einfallende Licht für alle dem Lichtfleck 110 zugeordneten Mikrospiegel 102 auf den Brennpunkt $(x_0, y_0, z_0)$ reflektiert wird. Dies gelingt erfindungsgemäß durch

$$\vec{n} = \frac{\dfrac{\vec{p}}{|\vec{p}|} - \dfrac{\vec{k}}{|\vec{k}|}}{\left|\dfrac{\vec{p}}{|\vec{p}|} - \dfrac{\vec{k}}{|\vec{k}|}\right|} \quad , \quad \vec{p} = \begin{pmatrix} x_0 - x \\ y_0 - y \\ z_0 \end{pmatrix} \quad , \quad |\vec{p}| = \sqrt{(x_0 - x)^2 + (y_0 - y)^2 + z_0^{\,2}}$$

Befindet sich die Lichtquelle 120 an der Position $(x_L, y_L, z_L)$, so ist

$$\frac{\vec{k}}{|\vec{k}|} = \frac{\begin{pmatrix} x_L - x \\ y_L - y \\ z_L \end{pmatrix}}{\sqrt{(x_L - x)^2 + (y_L - y)^2 + z_L^{\,2}}}$$

Wird die Mikrospiegelgruppe 102 auf senkrechten Lichteinfall ausgelegt so ist

$$\frac{\vec{k}}{|\vec{k}|} = \begin{pmatrix} 0 \\ 0 \\ -1 \end{pmatrix} \quad ,$$

so dass sich der Normalenvektor $\vec{n}$ zu

$$\vec{n} = \frac{\dfrac{\vec{p}_n}{|\vec{p}_n|} - \dfrac{\vec{k}}{|\vec{k}|}}{\left\|\dfrac{\vec{p}}{|\vec{p}|} - \dfrac{\vec{k}}{|\vec{k}|}\right\|} = \frac{\begin{pmatrix} x_0 - x \\ y_0 - y \\ z_0 + \sqrt{\phantom{x}} \end{pmatrix}}{\sqrt{(x_0 - x)^2 + (y_0 - y)^2 + (z_0 + \sqrt{\phantom{x}})^2}} \quad ,$$

ergibt, wobei die Abkürzung $\sqrt{\phantom{x}} = \sqrt{(x_0 - x)^2 + (y_0 - y)^2 + z_0^2}$ verwendet wurde.

In analoger Weise kann der Normalenvektor $\vec{n}$ für Mikrospiegel berechnet werden, deren Brennpunkt $(x_0, y_0, z_0)$ mit $z_0 < 0$ unterhalb der Ebene des Sicherheitselements liegt. Dazu geht man erfindungsgemäß von der Beziehung

$$\vec{n} = -\frac{\dfrac{\vec{p}}{|\vec{p}|} + \dfrac{\vec{k}}{|\vec{k}|}}{\left\|\dfrac{\vec{p}}{|\vec{p}|} + \dfrac{\vec{k}}{|\vec{k}|}\right\|}$$

aus, die weitere Berechnung erfolgt wie bei Hohlspiegehl.

Gekrümmte Linsen lassen sich bei der Zerlegung in Mikrooptikelemente durch kleine Mikroprismen nachstellen, die, wenn die Größe der Mikroprismen unterhalb des Auflösungsvermögens der Betrachtungssituation liegt, mit gleicher optischer Wirkung einsetzbar, aber einfacher zu berechnen und herzustellen sind.

In Fig. 11 sind zur Illustration bei einer schachbrettartigen Zerlegung wie in Fig. 8(b) einige Mikroprismen 122 im Querschnitt gezeigt. Analog zum Vorgehen bei den Mikrospiegeln 102 kann auch für die Mikroprismen 122 der Normalenvektor $\vec{n}$ so berechnet werden, dass das von der Lichtquelle 120 einfallende Licht jeweils zur gewünschten Position des Lichtflecks 110 gebrochen wird. Die in Fig. 11 freibleibenden Felder 124 können mit Mikroprismen belegt werden, die einem anderen Lichtfleck zugeordnet sind.

Bei allen beschriebenen Varianten könnten die refraktiven und/ oder reflektiven optischen Elemente auch in ein Umgebungsmaterial einbettet bzw. mit einer Schutzschicht versehen sein. Durch eine solche Einbettung werden die optischen Elemente einerseits vor Versclunutzung und Abrieb geschützt und anderseits wird eine unbefugte Nachstellung durch Abprägen der Oberflächenstruktur wirksam verhindert.

Die Einbettung ist in Fig. 12 für ein Sicherheitselement 130 mit Mikrospiegeln 132 schematisch gezeigt. Durch die Einbettung der Mikrospiegel 132 in die transparente Schutzschicht 134 und den resultierenden Sprung des Brechungsindex an der Oberfläche 136 der Schutzschicht 134 ändert sich die Position der erzeugten Lichtflecke 140 gegenüber der Lichtfleckposition 142 bei einer nicht eingebetteten Mikrospiegelanordnung. Genauer gesagt, ändert sich bei einer Einbettung der Mikrospiegel 132 in eine Schutzschicht mit Brechungsindex n die Schwebehöhe eines von den Mikrospiegeln 132 erzeugten Lichtflecks 140 etwa um den Faktor $1/n$. Übliche Schutzlackschichten 134 haben eine Brechzahl von etwa $n = 1,5$, so dass sich die Schwebehöhen der Lichtflecken gegenüber den für eine offene Anwendung berechneten Schwebehöhen um etwa 2/3 verringern. Diese Änderung wird selbstverständlich in der Regel bereits bei der Auslegung der Mikrospiegelanordnung berücksichtigt so dass nach der Einbettung die gewünschten Schwebehöhen erreicht werden.

Bei eingebetteten Prismen oder Linsen kann der Brechzahlunterschied zwischen Prismen- bzw. Linsenmaterial und Einbettungsmaterial bei der Berechnung der Lichtstrahlablenkung entsprechend berücksichtigt werden.

Um ein visuell ansprechendes dreidimensionales Lichtfleckenbild zu erzeugen, sollen die Lichtflecken unterschiedliche Helligkeiten aufweisen können. Dabei kann auch erwünscht sein, dass ein Lichtfleck, also ein im Raum schwebender Punkt eines Motivs aus unterschiedlichen Richtungen unterschiedlich hell erscheint. Derartige unterschiedliche Helligkeiten von Lichtflecken können im Rahmen der Erfindung auf verschiedene Arten erzeugt werden. Beispielsweise können dazu die optischen Elemente, die einem Lichtfleck zugeordnet sind, je nach dem gewünschten Bruchteil der Maximalhelligkeit abgedunkelt werden.

Gegenwärtig ist allerdings bevorzugt, die Helligkeit eines Lichtflecks nach Zerlegung in Mikrooptikelemente über den Flächenanteil, der mit Mikrooptikelementen belegt ist, oder über die Anzahl der Felder, die pro Raumwinkel für einen Lichtfleck zuständig sind, einzustellen. Dadurch ergeben sich Bildbereiche, die keine auf einen Lichtfleck gerichteten Spiegel oder Prismen enthalten und die dunkel gehalten werden müssen.

Derartige Bildbereiche können beispielsweise auf eine der folgenden Arten erzeugt werden. Bei einer ersten Variante werden die dunkleren Partien im spiegelnden Lichtfeckenbild mit Lichtfallen versehen, etwa mit Subwellenlängenstrukturen, wie etwa Mottenaugenstrukturen, oder mit trichterförmigen, reflektierenden Strukturen mit steilen Flanken, bei denen einfallendes Licht wenig oder gar nicht zurück reflektiert wird. Wegen der steilen Flanken sind derartige Lichtfallen allerdings nicht einfach herzustellen. Daher bietet es sich an, die dunklen Partien im spiegelnden Lichtfleckenbild mit Spiegeln auszustatten, die so orientiert sind, dass sich darin Raumbereiche spiegeln, die keine Lichtquellen enthalten. Die Spiegel können dazu beispielsweise auf den Körper des Betrachters gerichtet sein.

Bei Durchsichtssicherheitselementen werden die dunklen Partien vorzugsweise mit Prismen ausgestattet, die Lichtstrahlen aus Richtungen zum Auge des Betrachters lenken, in denen sich keine Lichtquellen befinden, beispielsweise vom Fußboden.

Der Flächenbereich, in dem die optischen Elemente angeordnet sind, muss nicht eben, sondern kann in beliebiger Weise gekrümmt sein. Dies gelingt besonders einfach, wenn die optischen Elemente durch kleine Mikrooptikelemente gebildet sind. Da, ohnehin für jedes Mikrooptikelement ein Normalenvektor berechnet wird (Figuren 10, 11), kann die lokale Position und Orientierung der Oberfläche des Sicherheitselements ohne großen Zusatzaufwand berücksichtigt werden, wie nachfolgend am Beispiel einer Mikrospiegelanordnung erläutert:

Bezeichnet wie oben $(x_0, y_0, z_0)$ die Position des gewünschten Lichtflecks, $(x, y, z)$ die Position eines Mikrospiegels im Raum, wobei diese Position die gekrümmte Oberfläche des Sicherheitselements beinhaltet, bezeichnet weiter $\vec{n}$ den Normalenvektor des Mikrospiegels an der Position $(x, y, z)$, $\vec{k}$ den Richtungsvektor des einfallenden Lichtstrahls und $\vec{p}$ den Richtungsvektor vom Mikrospiegel zum Lichtfleck, so ist erfindungsgemäß

$$\vec{n} = \pm \frac{\dfrac{\vec{p}}{|\vec{p}|} \mp \dfrac{\vec{k}}{|\vec{k}|}}{\left|\dfrac{\vec{p}}{|\vec{p}|} \mp \dfrac{\vec{k}}{|\vec{k}|}\right|} \quad , \quad \vec{p} = \begin{pmatrix} x_0 - x \\ y_0 - y \\ z_0 - z \end{pmatrix} \quad , \quad |\vec{p}| = \sqrt{(x_0 - x)^2 + (y_0 - y)^2 + (z_0 - z)^2}$$

wobei das obere Vorzeichen für $z_0 > 0$, also ein über der Substratebene schwebendes, reelles Bild, und das untere Vorzeichen für $z_0 < 0$, also ein unterhalb der Substratebene schwebendes, virtuelles Bild gilt.

Bei einer Weiterbildung der Erfindung kann das Sicherheitselement bei Beleuchtung auch ein Lichtflecken-Wechselbild erzeugen, bei dem für den Betrachter aus unterschiedlichen Richtungen unterschiedliche Bilder sichtbar werden. Dazu kann beispielsweise für ein spiegelndes Sicherheitselement wie folgt vorgegangen werden, die Vorgehensweise für ein Durchsichtssicherheitselement ist analog:

Das Sicherheitselement soll bei seitlichem Kippen einen Bildwechsel von einem Lichtfleckenbild A zu einem Lichtfleckenbild B zeigen. Zunächst werden für beide Lichtfleckenbilder die benötigten optischen Elemente bestimmt, die die Lichtfleckenbilder bei Beleuchtung erzeugen. Dabei wird, wie im Zusammenhang mit den Figuren 8 bis 10 beschrieben, jedem Lichtfleck eine Mehrzahl von optischen Elementen, hier einer Mehrzahl von Mikrospiegeln zuordnet.

Bei der Anordnung der Mikrospiegel im Flächenbereich des Sicherheitselements werden dann für das Lichtfleckenbild A diejenigen Mikrospiegel weggelassen, bei denen die x-Komponente $n_x$ des Normalenvektors größer als Null ist. Dadurch wird die Hälfte der Spiegelplätze frei und das Bild ist nur in einem eingeschränkten Winkelbereich sichtbar.

Für das Lichtfleckenbild B werden diejenigen Mikrospiegel weggelassen, bei denen die x-Koinpoi¯ie̦ite $n_x$ des Normalenvektors kleiner als Null ist. Mit dieser reduzierten Spiegelanordnung werden die freigewordenen Spiegelplätze des Lichtfleckenbilds A belegt. Beim seitlichen Kippen der Anordnung wird dann abwechselnd das Lichtfleckenbild A und das Lichtfleckenbild B sichtbar.

Das Sicherheitselement kann auch auf vertikales Kippen ausgelegt werden, beispielsweise indem für das Lichtfleckenbild A diejenigen Mikrospiegel weggelassen werden, bei denen die y-Komponente des Normalenvektors $n_y$ größer als Null ist, und für das Lichtfleckenbild B die Mikrospiegel, für die $n_y < 0$ ist. Die reduzierten Spiegelanordnungen mit ihrem eingeschränkten Sichtbarkeitsbereich werden dann auf dem Flächenbereich des Sicherheitselements gemischt.

Anstelle der genannten Bedingungen können selbstverständlich auch andere Kriterien zur Trennung der Lichtfleckenbilder eines Wechselbilds verwendet werden. Beispielsweise können durch die Bedingungen

$n_y > c_1$ für Bild A , $c_1 < n_y < c_2$ für Bild B, $n_y < c_2$ für Bild C

mit zwei Zahlenwerten $c_1 < c_2$ drei Lichtfleckenbilder A, B, C beim vertikalen Kippen wechseln. Durch die Wahl der

Zahlenwerte $c_1$ und $c_2$ kann die Größer der Sichtbarkeitsbereiche nach Wunsch eingestellt werden.

Neben dem Wechsel zwischen mehreren 3D-Lichtfleckenbildern kommt auch ein Wechsel zwischen einem oder mehreren 3D-Lichttleckenbildern und einem oder mehreren auf andere Weise erzeugten Bildern in Frage.

Es kann sich auch empfehlen, in dem Lichtfleckenbild ein dreidimensionales Motiv mit einem zweidimensionalen Motiv zu kombinieren, bei dem alle Bildpunkte in derselben Höhe, vorzugsweise in Höhe der Ebene des Sicherheitselements oder nach der Ebene des Sicherheitselements liegen. Solche zweidimensionalen Lichtfleckenmotive lassen sich nämlich auch bei schlechteren Beleuchtungsbedingungen noch gut erkennen. Wird beispielsweise ein zweidimensionales Vordergrund-Motiv mit einem dreidimensionalen Hintergrund-Motiv kombiniert, so verschwindet das Lichtfleckenbild auch bei schlechten Lichtverhältnissen nicht vollständig, sondern wird lediglich auf das robustere zweidimensionale Vordergrundmotiv reduziert. Eine Echtheitsprüfung ist daher auch bei schlechten Lichtverhältmissen noch möglich.

Ein Lichtfleckenbild kann also neben schwebenden 3D-Lichtflecken, die aus bestimmten Blickwinkeln sichtbar sind, auch 2-dimensional erscheinende Bereiche enthalten, die aus den gleichen oder anderen Blickwinkeln sichtbar sind. Die 2D-und 3D-Partien können also nebeneinander liegen und/ oder bei Änderung der Betrachtungsrichtung wechselweise am gleichen Ort erscheinen.

Bei 2D-3D-Bildern hat man neben 3-dimensional wirkenden Partien (die vor oder hinter der Ebene des Sicherheitselements zu sehen sind oder die Ebene des Sicherheitselements zu durchdringen scheinen) auch 2-dimensional wirkende Partien in Höhe der Ebene des Sicherheitselements oder nahe der Ebene des Sicherheitselements (in der Höhenstufe 0 oder nahe der Höhenstufe 0).

Für einen Bereich in der Höhe Null kann man ausgehend von der Spiegel- oder Prismenbelegung, die für Lichtpunkte in geringer Höhe (z.B. die Höhe 0,5 mm) mit dem gewünschten Blickwinkelbereich berechnet wird. Hier sind alle Normalenvektoren enthalten, die den avisierten Raumwinkel bedienen. Während für schwebende Lichtpunkte die Mikrospiegel oder Mikroprismen in der Ebene des Sicherheitselements so sortiert sind, dass bestimmte Punkte im Raum bedient werden, müssen die so berechneten Mikrospiegel einschließlich ihrer Neigung in dem für die Höhe 0 vorgesehenen Bereich statistisch verteilt werden. Dann werden keine bestimmten Punkte im Raum beleuchtet, sondern wie erwünscht ein Raumwinkel bedient. Für kleinere Intensität ist diese statistisch gemischt belegte Fläche entsprechend lückenhaft zu gestalten, indem z.B. nicht alle Pixel belegt werden oder die Pixel nicht voll belegt werden.

Nach einer anderen Weiterbildung weist das Lichtfleckenbild zusätzlich zu der offen sichtbaren Bildinformation noch eine versteckte Bildinformation (Hidden Image) auf. Dazu werden die optischen Elemente der offenen Bildinformation beabstandet angeordnet und die Lücken zumindest teilweise mit optischen Elementen der versteckten Bildinformation belegt.

Eine versteckte Bildinformation kann beispielsweise erzeugt werden, indem den zugehörigen Lichtflecken sehr kleine Öffnungswinkel zugeordnet werden, etwa ein Öffnungswinkel = 0 für Parallellicht.

Den Lichtflecken der versteckten Bildinformation können auch unterschiedliche Richtungen zugeordnet werden, die so weit auseinander liegen, dass beim Betrachten ohne Hilfsmittel kein zusammenhängendes Bild erfasst wird. Zur Echtheitsprüfung kann das Bild auf einer Mattscheibe aufgefangen werden. Die Richtungen der versteckten Bildinformation liegen vorzugsweise außerhalb der Richtungen, unter denen das offene 3D-Lichtfleckenbild betrachtet wird, so das Vorliegen einer versteckten Information nicht ohne weiteres erkennbar ist.

In einer vorteilhaften Ausgestaltung werden die optischen Elemente der versteckten Bildinformation teilweise oder vollständig in eng benachbarten Teilbereichen des Sicherheitselements untergebracht und gegebenenfalls mehrfach über die Fläche des Sicherheitselements wiederholt. Die versteckte Bildinformation kann dann durch Beleuchtung mit einem schmalen Laserstrahl sukzessive oder als Ganzes erfasst und auf einen geeignet platzierten Schirm projiziert werden.

Nachfolgend wird eine besonders bevorzugte Vorgehensweise beim Herstellen eines allgemeinen dreidimensionalen Lichtfleckenbilds genauer beschrieben.

Zunächst wird ein gewünschtes dreidimensionales Motiv mit Bildpunkten Pj und Höhenwerten $Z_j$ über der xy-Ebene definiert, wobei die Bildpunkte den bei Beleuchtung entstehenden Lichtflecken entsprechen. Für einen normalen Betrachtungsabstand von etwa 30 cm sollen die Bildpunktabstände dabei im Bereich von 0,1 bis 0,5 mm liegen. Weiter wird den Bildpunkten $P_j$ eine Helligkeit $I_j$ zwischen 0% und 100% zugeordnet. Dann werden den Bildpunkten Öffnungskegel zugeordnet, die ein Öffnungsverhältnis > 0,2 aufweisen, beispielsweise ein Öffnungsverhältnis von 0,4. Für jeden Bildpunkt $P_j$ definiert der Schnitt des von dem Bildpunkt ausgehenden Öffnungskegels mit der xy-Ebene dort einen Einzugsbereich Ej zu dem Bildpunkt Pj.

Die xy-Ebene selbst wird in erste, größere Felder, beispielsweise einer Abmessung von 0,1mm × 0,1 mm aufgeteilt. Jedes der größeren Felder wird weiter in zweite, kleinere Felder, beispielsweise einer Größe von $10 \mu m \times 10 \mu m$ aufgeteilt. Die größeren Felder werden nachfolgend als Grobfelder, die kleiner Felder als Feinfelder bezeichnet.

Im Einzugsbereich $E_j$ jedes Bildpunkts $P_j$ werden nun so viele Feinfelder für diesen Bildpunkt reserviert, wie auf Grundlage des Höhenwerts $Z_j$ und des Helligkeitswerts $I_j$ bestimmt werden. Beispielsweise kann die Feinfelderan-zahl proportional zum Helligkeitswert und umgekehrt proportional zu $(Zj)^\alpha$ mit einem Exponenten $\alpha$ 1 gewählt werden, der bei durch rinnenförmige Spiegel oder Zylinderlinsen gebildeten Lichtflecken $\alpha$ = 1 und bei durch zweidimensional fokussierende Linsen oder Spiegel gebildeten Lichtflecken $\alpha$ =2 beträgt. Die für den Bildpunkt $P_j$ reservierten Feinfelder werden dann im Wesentlichen gleichmäßig auf die Grobfelder im Einzugsbereich $E_j$ des Bildpunkts $P_j$ verteilt.

In die Anzahl der Feinfelder pro Grobfeld kann dabei auch ein Korrekturfaktor einfließen, der beispielsweise wie folgt bestimmt wird: Zunächst wird ohne Korrektfaktor innerhalb jedes Grobfelds die Anzahl der zu belegenden Feinfelder, die zu unterschiedlichen Bildpunkten $P_j$ gehören, addiert. Dadurch ergibt sich ein Belegungsvorschlag für die Anzahl der insgesamt belegten Feinfelder in jedem Grobfeld.

Ist die Anzahl der belegten Feinfelder für alle Grobfelder geringer als die maximal mögliche Anzahl, so kann ein Korrekturfaktor größer 1 gewählt werden, und die Belegung mit diesem Korrekturfaktor multipliziert werden, so dass die maximale Belegung in einigen Grobfeldern erreicht wird. Übersteigt andererseits die Anzahl der belegten Feinfelder die Maximalbelegung, so wird entsprechend ein Korrekturfaktor kleiner 1 gewählt, der nach Multiplikation zu einer Belegung kleiner oder gleich der Maximalbelegung führt. Wenn die Maximalbelegung in nur wenigen Grobfeldern überschritten wird, können statt einer gleichmäßigen Reduktion auch nur die höchsten Intensitäten auf die Maximalbelegung gekappt werden oder die Feinfelder der überschreitenden Grobfelder werden in angrenzende Grobfelder verschoben.

Die so erhaltene Belegung kann nun im Flächenbereich des Sicherheitselements realisiert werden. In den belegten Feinfeldern werden Spiegel oder Prismen angeordnet, die das einfallende Licht auf den entsprechenden Lichtfleck spiegeln bzw. brechen. In dabei freibleibenden Flächenbereichen des Sicherheitselements können zusätzliche Sicherheitselemente eingebracht werden, beispielsweise kann dort ein Hidden Image der oben beschriebenen Art untergebracht werden.

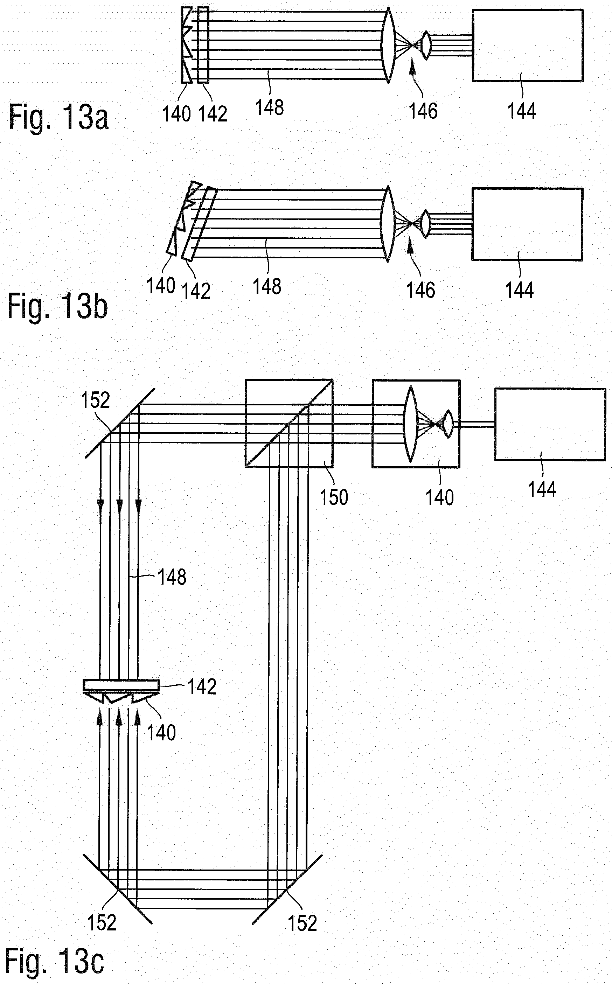

Ein erfindungsgemäßes Lichtfleckenbild kann auch als Master für ein Volumenhologramm dienen, wie nunmehr anhand dreier Ausgestaltungen mit Bezug auf Fig. 13 illustriert.

Bei dem Ausführungsbeispiel der Fig. 13(a) dient eine Darstellungsanordnung 140 als Master, die ein reflektierendes 3D-Lichtfleckenbild mit Mikrospiegeln aufweist, welches für senkrechten Lichteinfall berechnet ist. Eine Photopolymerplatte 142 dient als Aufzeichnungsplatte für das Voltunenhologramm. Die Photopolymerplatte 142 wird vor der Darstellungsanordnung 140 angeordnet, so dass die Laserstrahlung des Aufzeichnungslasers 144 nach der Strahlaufweitung 146 als Referenzwelle 148 senkrecht auf die Photopolymerplatte 142 einfällt Ein Teil der Laserstrahlung durchstrahlt die Photopolymerplatte 142, fällt senkrecht auf die Darstellungsanordnung 140 und bildet nach der Reflexion an der Darstellungsanordnung 140 die Objektwelle, die in der Photopolymerplatte 142 mit der Referenzwelle 148 interferiert. In die Photopolymerplatte 142 werden dadurch Bragg-Gitter einbelichtet, die als Volumengitterbild das gleiche 3D-Bild wie das als Master dienende 3D-Lichtfleckenbild der Darstellungsanordnung 140 zeigt.

Bei der Abwandlung der Fig. 13(b) enthält die als Master dienende Darstellungsanordnung 140 ein reflektierendes 3D-Lichtfleckenbild, das für Lichteinfall unter einem bestimmten Winkel zur Senkrechten berechnet ist. Entsprechend werden die Darstellungsanordnung 140 und die vor der Darstellungsanordnung angeordnete Photopolymerplatte 142 unter diesem Winkel mit der Laserstrahlung beaufschlagt. Durch Interferenz der Referenzwelle 148 und der nach Durchstrahlung der Photopolymerplatte 142 von der Darstellungsanordnung reflektierte Objektwelle wird ein Volumengitterbild in der Photopolymerplatte 142 erzeugt, das das gleiche 3D-Bild wie das als Master dienende 3D-Lichtfleckenbild der Darstellungsanordnung 140 zeigt.

Schließlich dient bei dem Ausführungsbeispiel der Fig. 13(c) eine Darstellungsanordnung 140 mit einem brechenden 3D-Lichtfleckenbild mit Mikroprismen, das für senkrechten Lichteinfall berechnet ist, als Master. Hier werden die Darstellungsanordnung 140 und die vor der Darstellungsanordnung angeordnete Photopolymerplatte 142 durch einen Strahlteiler 150 und Umlenkspiegel 152 von gegenüberliegenden Seiten her mit der Laserstrahlung beaufschlagt. In der Photopolymerplatte 142 interferieren die Referenzwelle 148 und die von der Darstellungsanordnung 142 gebrochene Objektwelle und erzeugen so ein Volumengitterbild, das das gleiche 3D-Bild wie das als Master dienende 3D-Lichtfleckenbild der Darstellungsanordnung 140 zeigt.

**Patentansprüche**

1. Darstellungselement (20) mit einem Substrat (22)mit einem Flächenbereich, in dem eine Mehrzahl optischer Elemente (24) angeordnet ist, wobei das Darstellungselement (20) ausgelegt und bestimmt ist, bei Beleuchtung mit parallelem Licht einer Lichtquelle (34) ein Lichtfleckenbild (30) aus einer Mehrzahl von Lichtflecken (32) zu erzeugen, die für einen Betrachter oberhalb oder unterhalb des Flächenbereichs schwebend erscheinen und die in Form eines vorbestimmten Motivs angeordnet sind, wobei die Lichtflecken (32) reelle Bilder oder virtuelle Bilder der beleuchtenden Lichtquelle (34) sind, wobei die optischen Elemente durch refraktive und/oder reflektive optische Elemente (24) gebildet sind und jedem Lichtfleck (32) des Lichtfleckenbilds eine Mehrzahl von refraktiven und/oder reflektiven optischen Elementen (24) zugeordnet ist, welche bei Beleuchtung (34) des Darstellungselements (20) zur Erzeugung des ihnen zugeordneten Lichtflecks (32) beitragen, wobei für die Lichtflecken (32) und die zugeordneten optischen Elemente (24) jeweils f/d < 5 gilt, wobei f die Schwebehöhe des Lichtflecks (32) oberhalb oder unterhalb des Flächenbereichs bezeichnet, die der Brennweite der zu diesem Lichtfleck beitragenden optischen Elemente (24) entspricht, und d den Durchmesser der zu diesem Lichtfleck (32) beitragenden optischen Elemente (24), wobei die Lichtflecken (32) des Lichtfleckenbilds (30) bereichsweise alle in derselben Schwebehöhe oberhalb oder unterhalb des Flächenbereichs und über oder unter dem Darstellungselement (20) schweben, um ein Kulissenmotiv zu bilden.

2. Darstellungselement nach Anspruch 1, wobei die optischen Elemente gewölbte Spiegel umfassen, insbesondere Hohlspiegel oder Wölbspiegel.

3. Darstellungselement nach Anspruch 2, wobei die gewölbten Spiegel sphärisch, elliptisch, rotationssymmetrisch asphärisch, nichtrotationssymmetrisch asphärisch oder rinnenförmig ausgebildet sind, wobei im letzteren Fall die Rinnen geradlinig oder krummlinig verlaufen, und/oder dass die gewölbten Spiegel zumindest teilweise durch Fresnelspiegel gebildet sind.

4. Darstellungselement nach wenigstens einem der Ansprüche 1 bis 3, wobei die optischen Elemente Linsen umfassen, insbesondere sphärische, elliptische, rotationssymmetrisch asphärische, nichtrotationssymmetrisch asphärische oder zylindrische Linsen.

5. Darstellungselement nach Anspruch 4, wobei die Linsen zumindest teilweise durch Fresnellinsen gebildet sind.

6. Darstellungselement nach wenigstens einem der Ansprüche 1 bis 5, wobei jedem Lichtfleck des Lichtfleckenbilds eine Mehrzahl von beanstandet auf dem Flächenbereich verteilten optischen Elemente zugeordnet ist.

7. Darstellungselement nach Anspruch 6, wobei die Lichtflecken des Lichtfleckenbilds unterschiedliche Helligkeiten aufweisen und jedem Lichtfleck eine solche Anzahl von optischen Elementen zugeordnet ist, die der Helligkeit des Lichtflecks innerhalb des von den Lichtflecken gebildeten Motivs entspricht, oder jedem Lichtfleck eine solche Gesamtfläche von optischen Elementen zugeordnet ist, die der Helligkeit des Lichtflecks innerhalb des von den Lichtflecken gebildeten Motivs entspricht.

8. Darstellungselement nach Anspruch 6 oder 7, wobei optische Elemente, die verschiedenen Lichtflecken zugeordnet sind, in dem Flächenbereich ineinander verschachtelt angeordnet sind.

9. Darstellungselement nach wenigstens einem der Ansprüche 6 bis 8, wobei die optischen Elemente durch ebene Mikrospiegel oder durch kleine Mikroprismen gebildet sind.

10. Darstellungselement nach wenigstens einem der Ansprüche 1 bis 9, wobei das vorbestimmte Motiv ein Wechselbild ist, das aus unterschiedlichen Betrachtungsrichtungen unterschiedliche Bilder zeigt.

11. Darstellungselement nach wenigstens einem der Ansprüche 1 bis 10, wobei der Flächenbereich, in dem die Mehrzahl optischer Elemente angeordnet ist, gekrümmt ist.

12. Darstellungselement nach wenigstens einem der Ansprüche 1 bis 11, wobei eine Teilmenge der optischen Elemente eine versteckte Bildinformation erzeugt, die ohne Hilfsmittel nicht erkennbar ist, insbesondere die versteckte Bildinformation nur bei gerichteter Beleuchtung mit Laserlicht sichtbar wird oder die versteckte Bildinformation einen vorbestimmten Auffangschirm benötigt.

13. Darstellungselement nach wenigstens einem der Ansprüche 1 bis 12, wobei die optischen Elemente eine periodische Anordnung von Mikrospiegeln umfassen, die jeweils einen Abstand zum nächsten Nachbarn von 2 mm oder weniger, insbesondere von 1 mm oder weniger aufweisen.

14. Darstellungselement nach wenigstens einem der Ansprüche 1 bis 13, wobei die optischen Elemente in eine Umgebungsschicht oder einen Umgebungsschichtverbund, insbesondere in eine Schutzschicht eingebettet sind.

15. Darstellungselement nach wenigstens einem der Ansprüche 1 bis 14, wobei die optischen Elemente als Prägestrukturen in einer Prägelackschicht ausgebildet sind.

16. Darstellungselement nach Anspruch 15, wobei
die Prägestrukturen mit einer reflexionserhöhenden Beschichtung, insbesondere mit einer Metallisierung, einer hochbrechenden Beschichtung, einem Dünnschichtelement mit Farbkippeffekt oder einer cholesterischen Flüssigkristallschicht versehen sind.

17. Darstellungselement nach Anspruch 15 oder 16, wobei die Prägestrukturen Strukturhöhen von weniger als 100 $\mu$m, bevorzugt von weniger als 20 $\mu$m, besonders bevorzugt von weniger als 5 $\mu$m aufweisen.

18. Darstellungselement nach wenigstens einem der Ansprüche 1 bis 17, wobei das Darstellungselement ein Sicherheitselement für Sicherheitspapiere, Wertdokumente und andere abzusichernde Gegenstände ist, insbesondere ein Sicherheitsfaden, ein Sicherheitsband, ein Sicherheitsstreifen, ein Etikett oder ein Transferelement ist.

19. Verfahren zum Herstellen eines Darstellungselements (20) nach einem der Ansprüche 1 bis 18, wobei bei dem Verfahren ein Substrat (22) bereitgestellt wird und in einem Flächenbereich des Substrats (22) eine Mehrzahl refraktiver und/oder reflektiver optischer Elemente (24) angeordnet wird, wobei jedem Lichtfleck (32) des Lichtfleckenbilds (30) eine Mehrzahl von refraktiven und/oder reflektiven optischen Elementen (24) zugeordnet wird, welche bei Beleuchtung (34) des Darstellungselements (20) zur Erzeugung des ihnen zugeordneten Lichtflecks (32) betragen, wobei für die Lichtflecken (32) und die zugeordneten optischen Elemente (24) jeweils f/d < 5 gilt, wobei f die Schwebehöhe des Lichtflecks (32) oberhalb oder unterhalb des Flächenbereichs bezeichnet, die der Brennweite der zu diesem Lichtfleck (32) beitragenden optischen Elemente (24) entspricht, und d den Durchmesser der zu diesem Lichtfleck (32) beitragenden optischen Elemente (24), wobei die Lichtflecken (32) des Lichtfleckenbilds (30) bereichsweise alle in derselben Schwebehöhe oberhalb oder unterhalb des Flächenbereichs und über oder unter dem Darstellungselement (20) schweben, um ein Kulissenmotiv zu bilden.

20. Verfahren nach Anspruch 19, wobei

- ein gewünschtes dreidimensionales Motiv mit Bildpunkten Pj und Höhenwerten Zj über einer xy-Ebene vorgegeben wird, wobei die Bildpunkte den bei Beleuchtung entstehenden Lichtflecken entsprechen,
- für jeden Bildpunkt $P_j$ eine Helligkeit $I_j$ zwischen 0% und 100% festgelegt wird,
- den Bildpunkten $P_j$ Öffnungskegel zugeordnet werden, die ein Öffnungsverhältnis > 0,2 aufweisen,
- für jeden Bildpunkt Pj durch einen Schnitt des von dem Bildpunkt ausgehenden Öffnungskegels mit der xy-Ebene ein Einzugsbereich Ej bestimmt wird,
- die xy-Ebene in eine Anzahl von Grobfeldern und die Grobfelder jeweils in eine Anzahl von Feinfeldern aufgeteilt wird,
- für jeden Bildpunkt $P_j$ auf Grundlage des festgelegten Höhenwerts $Z_j$ und des festgelegten Helligkeitswerts $I_j$ eine Anzahl an zu füllenden Feinfeldern bestimmt werden,
- die für den Bildpunkt $P_j$ bestimmten zu füllenden Feinfelder im Wesentlichen gleichmäßig auf die Grobfelder im Einzugsbereich $E_j$ des Bildpunkts $P_j$ verteilt werden, und
- die zu füllenden Feinfelder mit refraktiven und/oder reflektiven optischen Elementen belegt werden, die bei Beleuchtung des Darstellungselements zur Erzeugung des dem Bildpunkt $P_j$ entsprechenden Lichtflecks beitragen.

21. Datenträger mit einem Darstellungselement nach wenigstens einem der Ansprüche 1 bis 18.

22. Datenträger nach Anspruch 21, wobei das Darstellungselement ein zumindest teilweise durchsichtiges Sicherheitselement ist, das in oder über einem transparenten Fensterbereich oder einer durchgehenden Öffnung des Datenträgers angeordnet ist, oder dass das Darstellungselement ein reflektierendes Sicherheitselement ist, das in einem opaken Bereich des Datenträgers angeordnet ist.

23. Datenträger nach Anspruch 21 oder 22, wobei der Datenträger ein Wertdokument, wie eine Banknote, insbesondere eine Papierbanknote, eine Polymerbanknote, eine Folienverbundbanknote oder eine Urkunde, ein Pass oder eine Ausweiskarte ist.

## Claims

1. Representation element (20) having a substrate (22) with a surface region in which a plurality of optical elements (24) are arranged, wherein the representation element (20) is designed and intended
to generate, when illuminated with parallel light from a light source (34), a light spot image (30) from a plurality of light spots (32), which appear for an observer to be floating above or below the surface region and which are arranged in the form of a predetermined motif, wherein the light spots (32) are real images or virtual images of the illuminating light source (34), wherein the optical elements are made up of refractive and/or reflective optical elements (24) and each light spot (32) of the light spot image is assigned a plurality of refractive and/or reflective optical elements (24) which in the case of illumination (34) of the representation element (20) contribute to the generation of the light spot (32) assigned thereto, wherein $f/d < 5$ for the light spots (32) and the assigned optical elements (24) in each case, wherein f denotes the floating height of the light spot (32) above or below the surface region, which corresponds to the focal length of the optical elements (24) contributing to this light spot, and d denotes the diameter of the optical elements (24) contributing to this light spot (32), wherein the light spots (32) of the light spot image (30) all float in regions at the same floating height above or below the surface region and above or below the representation element (20) to form a backdrop motif.

2. Representation element according to Claim 1, wherein the optical elements comprise curved mirrors, in particular concave mirrors or convex mirrors.

3. Representation element according to Claim 2, wherein the curved mirrors are spherical, elliptical, rotationally symmetrically aspherical, non-rotationally symmetrically aspherical or channel-shaped, wherein in the latter case the channels are linear or curvilinear, and/or the curved mirrors are at least partially made up of Fresnel mirrors.

4. Representation element according to at least one of Claims 1 to 3, wherein the optical elements comprise lenses, in particular spherical, elliptical, rotationally symmetrically aspherical, non-rotationally symmetrically aspherical or cylindrical lenses.

5. Representation element according to Claim 4, wherein the lenses are at least partially made up of Fresnel lenses.

6. Representation element according to at least one of Claims 1 to 5, wherein each light spot of the light spot image is assigned a plurality of optical elements distributed spaced-apart on the surface region.

7. Representation element according to Claim 6, wherein the light spots of the light spot image have different brightnesses and each light spot is assigned such a number of optical elements that corresponds to the brightness of the light spot within the motif formed by the light spots, or each light spot is assigned such a total surface area of optical elements that corresponds to the brightness of the light spot within the motif formed by the light spots.

8. Representation element according to Claim 6 or 7, wherein optical elements which are assigned to different light spots are arranged in the surface region so as to be interleaved.

9. Representation element according to at least one of Claims 6 to 8, wherein the optical elements are made up of plane micromirrors or of small microprisms.

10. Representation element according to at least one of Claims 1 to 9, wherein the predetermined motif is an alternating image that shows different images from different viewing directions.

11. Representation element according to at least one of Claims 1 to 10, wherein the surface region in which the plurality of optical elements are arranged is curved.

12. Representation element according to at least one of Claims 1 to 11, wherein a subset of the optical elements generates a hidden item of image information which is not visible without auxiliary means, in particular the hidden item of image information becomes visible only with directed illumination with laser light or the hidden item of image information requires a predetermined capture screen.

13. Representation element according to at least one of Claims 1 to 12, wherein the optical elements comprise a periodic arrangement of micromirrors, each having a distance from the nearest neighbour of 2 mm or less, in particular of 1 mm or less.

14. Representation element according to at least one of Claims 1 to 13, wherein the optical elements are embedded in a surrounding layer or a surrounding layer composite, in particular in a protective layer.

15. Representation element according to at least one of Claims 1 to 14, wherein the optical elements are formed as embossed structures in an embossing lacquer layer.

16. Representation element according to Claim 15, wherein the embossed structures are provided with a reflection-enhancing coating, in particular with a metallization, a high-refractive-index coating, a thin-film element with colour tilt effect or a cholesteric liquid crystal layer.

17. Representation element according to Claim 15 or 16, wherein the embossed structures have structure heights of less than 100 $\mu$m, preferably of less than 20 $\mu$m, particularly preferably of less than 5 $\mu$m.

18. Representation element according to at least one of Claims 1 to 17, wherein the representation element is a security element for security documents, documents of value and other objects to be secured, in particular a security thread, a security band, a security strip, a label or a transfer element.

19. Method for producing a representation element (20) according to any of Claims 1 to 18, wherein a substrate (22) is provided in the method and a plurality of refractive and/or reflective optical elements (24) are arranged in a surface region of the substrate (22), wherein each light spot (32) of the light spot image (30) is assigned a plurality of refractive and/or reflective optical elements (24) which in the case of illumination (34) of the representation element (20) contribute to the generating the light spot (32) assigned thereto, wherein f/d < 5 for the light spots (32) and the assigned optical elements (24) in each case, wherein f denotes the floating height of the light spot (32) above or below the surface region, which corresponds to the focal length of the optical elements (24) contributing to this light spot (32), and d denotes the diameter of the optical elements (24) contributing to this light spot (32), wherein the light spots (32) of the light spot image (30) all float in regions at the same floating height above or below the surface region and above or below the representation element (20) to form a backdrop motif.

20. Method according to Claim 19, wherein

- a desired three-dimensional motif with image points Pj and elevation values Zj over an xy plane is specified, wherein the image points correspond to the light spots created during illumination,
- for each image point $P_j$, a brightness $I_j$ is set between 0% and 100%,
- the image points $P_j$ are assigned opening cones having an opening ratio > 0.2,
- for each image point Pj, a collection region Ej is determined by an intersection of the opening cone emanating from the image point with the xy plane,
- the xy plane is divided into a number of coarse fields and the coarse fields are each divided into a number of fine fields,
- for each image point $P_j$, a number of fine fields to be filled are determined on the basis of the determined elevation value $Z_j$ and the determined brightness value $I_j$,
- the fine fields to be filled determined for the image point $P_j$ are distributed substantially evenly over the coarse fields in the collection region $E_j$ of the image point $P_j$, and
- the fine fields to be filled are occupied by refractive and/or reflective optical elements which contribute to the generation of the light spot corresponding to the image point $P_j$ in the case of illumination of the representation element.

21. Data carrier comprising a representation element according to at least one of Claims 1 to 18.

22. Data carrier according to Claim 21, wherein the representation element is an at least partially see-through security element, which is arranged in or over a transparent window region or a continuous opening in the data carrier, or the representation element is a reflective security element which is arranged in an opaque region of the data carrier.

23. Data carrier according to Claim 21 or 22, wherein the data carrier is a document of value, such as a banknote, in particular a paper banknote, a polymer banknote, a laminated foil banknote or a certificate, a passport or an identity card.

## Revendications

1. Élément de représentation (20) comportant un substrat (22) avec une zone de surface dans laquelle est agencée une pluralité d'éléments optiques (24), l'élément de représentation (20) étant conçu et déterminé pour générer, lors d'un éclairage par une lumière parallèle d'une source de lumière (34), une image à points lumineux (30) constituée d'une pluralité de points lumineux (32) qui semblent être flottants pour un observateur au-dessus ou au-dessous de la zone de surface et qui sont agencés sous la forme d'un motif prédéterminé, les points lumineux (32) étant des images réelles ou des images virtuelles de la source de lumière éclairante (34), les éléments optiques étant formés par des éléments optiques réfractants et/ou réfléchissants (24) et une pluralité d'éléments optiques réfractants et/ou réfléchissants (24) étant associée à chaque point lumineux (32) de l'image à points lumineux, lesquels éléments contribuent à la génération du point lumineux (32) qui leur est associé lors de l'éclairage (34) de l'élément de représentation (20), f/d < 5 s'appliquant respectivement aux points lumineux (32) et aux éléments optiques (24) associés, où f désigne la hauteur de flottement du point lumineux (32) au-dessus ou au-dessous de la zone de surface, qui correspond à la distance focale des éléments optiques (24) contribuant à ce point lumineux, et d est le diamètre des éléments optiques (24) contribuant à ce point lumineux (32), les points lumineux (32) de l'image à points lumineux (30) flottant tous par zones à la même hauteur de flottement au-dessus ou au-dessous de la zone de surface et au-dessus ou au-dessous de l'élément de représentation (20) afin de former un motif de coulisses.

2. Élément de représentation selon la revendication 1, dans lequel les éléments optiques comprennent des miroirs incurvés, en particulier des miroirs concaves ou des miroirs convexes.

3. Élément de représentation selon la revendication 2, dans lequel les miroirs incurvés sont réalisés de manière sphérique, elliptique, asphérique à symétrie de rotation, asphérique sans symétrie de rotation ou en forme de gouttière, dans lequel, dans ce dernier cas, les gouttières sont rectilignes ou curvilignes, et/ou les miroirs incurvés sont au moins partiellement formés par des miroirs de Fresnel.

4. Élément de représentation selon au moins l'une des revendications 1 à 3, dans lequel les éléments optiques comprennent des lentilles, en particulier des lentilles sphériques, elliptiques, asphériques à symétrie de rotation, asphériques sans symétrie de rotation ou cylindriques.

5. Élément de représentation selon la revendication 4, dans lequel les lentilles sont au moins partiellement formées par des lentilles de Fresnel.

6. Élément de représentation selon au moins l'une des revendications 1 à 5, dans lequel une pluralité d'éléments optiques répartis de manière irrégulière sur la zone de surface est associée à chaque point lumineux de l'image à points lumineux.

7. Élément de représentation selon la revendication 6, dans lequel les points lumineux de l'image à points lumineux présentent différentes luminosités, et un nombre d'éléments optiques correspondant à la luminosité du point lumineux au sein du motif formé par les points lumineux est associé à chaque point lumineux, ou une surface totale d'éléments optiques correspondant à la luminosité du point lumineux au sein du motif formé par les points lumineux est associée à chaque point lumineux.

8. Élément de représentation selon la revendication 6 ou 7, dans lequel les éléments optiques associés à différents points lumineux sont agencés de manière imbriquée les uns dans les autres dans la zone de surface.

9. Élément de représentation selon au moins l'une des revendications 6 à 8, dans lequel les éléments optiques sont formés par des micromiroirs plans ou par de petits microprismes.

10. Élément de représentation selon au moins l'une des revendications 1 à 9, dans lequel le motif prédéterminé est une image changeante qui présente différentes images selon différentes directions d'observation.

11. Élément de représentation selon au moins l'une des revendications 1 à 10, dans lequel la zone de surface dans laquelle est agencée la pluralité d'éléments optiques est incurvée.

12. Élément de représentation selon au moins l'une des revendications 1 à 11, dans lequel un sous-ensemble des éléments optiques génère des informations d'image cachées qui ne sont pas reconnaissables sans dispositif auxiliaire, en particulier, les informations d'image cachées n'étant visibles que lors d'un éclairage dirigé avec une lumière laser ou les informations d'image cachées nécessitant un écran de réception prédéterminé.

13. Élément de représentation selon au moins l'une des revendications 1 à 12, dans lequel les éléments optiques comprennent un agencement périodique de micromiroirs qui présentent chacun une distance au voisin le plus proche de 2 mm ou moins, en particulier de 1 mm ou moins.

14. Élément de représentation selon au moins l'une des revendications 1 à 13, dans lequel les éléments optiques sont intégrés dans une couche de revêtement ou un composite de couches de revêtement, en particulier dans une couche de protection.

15. Élément de représentation selon au moins l'une des revendications 1 à 14, dans lequel les éléments optiques sont réalisés sous forme de structures de gaufrage dans une couche de laque de gaufrage.

16. Élément de représentation selon la revendication 15, dans lequel les structures de gaufrage sont pourvues d'un revêtement augmentant la réflexion, en particulier d'une métallisation, d'un revêtement à indice de réfraction élevé, d'un élément à couches minces avec effet de changement de couleur ou d'une couche de cristaux liquides cholestériques.

17. Élément de représentation selon la revendication 15 ou 16, dans lequel les structures de gaufrage présentent des hauteurs de structure inférieures à 100 $\mu$m, de préférence inférieures à 20 $\mu$m, et de façon particulièrement préférée, inférieures à 5 $\mu$m.

18. Élément de représentation selon au moins l'une des revendications 1 à 17, dans lequel l'élément de représentation est un élément de sécurité destiné à des papiers de sécurité, des documents de valeur et d'autres objets à sécuriser, en particulier un fil de sécurité, une bande de sécurité, une bandelette de sécurité, une étiquette ou un élément de transfert.

19. Procédé de fabrication d'un élément de représentation (20) selon l'une quelconque des revendications 1 à 18, dans lequel, conformément au procédé, un substrat (22) est fourni et une pluralité d'éléments optiques réfractants et/ou réfléchissants (24) est agencée dans une zone de surface du substrat (22), une pluralité d'éléments optiques réfractants et/ou réfléchissants (24) étant associée à chaque point lumineux (32) de l'image à points lumineux (30), lesquels éléments contribuent à la génération du point lumineux (32) qui leur est associé lors de l'éclairage (34) de l'élément de représentation (20), f/d < 5 s'appliquant respectivement aux points lumineux (32) et aux éléments optiques (24) associés, où f désigne la hauteur de flottement du point lumineux (32) au-dessus ou au-dessous de la zone de surface, qui correspond à la distance focale des éléments optiques (24) contribuant à ce point lumineux (32), et d est le diamètre des éléments optiques (24) contribuant à ce point lumineux (32), les points lumineux (32) de l'image à points lumineux (30) flottant tous par zones à la même hauteur de flottement au-dessus ou au-dessous de la zone de surface et au-dessus ou au-dessous de l'élément de représentation (20) afin de former un motif de coulisses.

20. Procédé selon la revendication 19, dans lequel

- un motif tridimensionnel souhaité comportant des pixels Pj et des valeurs de hauteur Zj au-dessus d'un plan xy est prédéfini, les pixels correspondant aux points lumineux créés lors de l'éclairage,
- une luminosité $I_j$ comprise entre 0 % et 100 % est fixée pour chaque pixel $P_j$,
- des cônes d'ouverture présentant un rapport d'ouverture > 0,2 sont associés aux pixels $P_j$,
- une zone d'influence Ej est déterminée pour chaque pixel Pj par une intersection du cône d'ouverture partant du pixel avec le plan xy,
- le plan xy est divisé en un nombre de champs grossiers et les champs grossiers respectivement en un nombre de champs fins,
- un nombre de champs fins à remplir est déterminé pour chaque pixel $P_j$ sur la base de la valeur de hauteur $Z_j$ fixée et de la valeur de luminosité $I_j$ fixée,
- les champs fins à remplir déterminés pour le pixel $P_j$ sont répartis de manière sensiblement uniforme sur les champs grossiers dans la zone d'influence $E_j$ du pixel $P_j$, et
- les champs fins à remplir sont recouverts d'éléments optiques réfractants et/ou réfléchissants qui contribuent à la génération du point lumineux correspondant au pixel $P_j$ lors de l'éclairage de l'élément de représentation.

21. Support de données comprenant un élément de représentation selon au moins l'une des revendications 1 à 18.

22. Support de données selon la revendication 21, dans lequel l'élément de représentation est un élément de sécurité au moins partiellement transparent qui est agencé dans ou au-dessus d'une zone de fenêtre transparente ou d'une ouverture traversante du support de données, ou dans lequel l'élément de représentation est un élément de sécurité réfléchissant qui est agencé dans une zone opaque du support de données.

23. Support de données selon la revendication 21 ou 22, dans lequel le support de données est un document de valeur, tel qu'un billet de banque, en particulier un billet de banque en papier, un billet de banque en polymère, un billet de banque composite en feuille, ou un acte, un passeport ou une carte d'identité.

Fig. 1

Fig. 2

Fig. 3

Fig. 4

60

h

d

## Fig. 5a

z

64

62

hf

d

## Fig. 5b

42 40

80

70

72

## Fig. 6a

72

78

76

74

## Fig. 6b

Fig. 7

Fig. 8a

Fig. 8b

102  104

102  104

Fig. 8c

Fig. 8d

110

102  104  102  104

Fig. 9a

110  112

102  106  102  106

$d_m$

$d$

Fig. 9b

Fig. 10

Fig. 11

Fig. 12

Fig. 13a

140 142    148         146         144

Fig. 13b

140 142    148         146         144

152

148

142

140

150    140    144

152         152

Fig. 13c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 20090000530 A2
- WO 9008338 A1
- US 20020114078 A1
- US 20100231860 A1
- US 6288842 B1

- US 7261417 B2
- FR 2943800 A1
- DE 102009056934
- EP 0868313 B1
- WO 2005052650 A2

**In der Beschreibung aufgeführte Nicht-Patentliteratur**

- Micro-Optics. Elements, Systems and application. **M.C. HUTLEY**. Refractive Lenslet Arrays: 5.4 Thermal Reflow. Taylor & Francis, 1997, 132-136